# EUROPÄISCHE PATENTSCHRIFT

(11) **EP 2 912 949 B1**
(45) Veröffentlichungstag und Bekanntmachung des Hinweises auf die Patenterteilung: **06.05.2020**
(21) Anmeldenummer: 15153804.8
(22) Anmeldetag: 04.02.2015
(51) Int. Cl.: A23G 1/10, A23G 1/00, A23G 3/34, A23G 3/02, B01F 15/02

(54) **ANLAGE ZUR HERSTELLUNG UND/ODER AUFBEREITUNG VON CONFECTIONERY-MASSEN UND VERFAHREN ZUR HERSTELLUNG UND/ODER AUFBEREITUNG VON CONFECTIONERY-MASSEN**
SYSTEM FOR PRODUCING AND/OR PROCESSING CONFECTIONERY MASSES AND METHOD FOR PRODUCING AND/OR PROCESSING CONFECTIONERY MASSES
INSTALLATION DE FABRICATION ET/OU DE PRÉPARATION DE MASSE DE CONFISERIE ET PROCÉDÉ DE FABRICATION ET/OU DE PRÉPARATION DE MASSES DE CONFISERIE

(30) Priorität: 26.02.2014 DE 102014102526
(43) Veröffentlichungstag der Anmeldung: 02.09.2015
(73) Patentinhaber: NETZSCH-Feinmahltechnik GmbH, 95100 Selb (DE)
(72) Erfinder: Harbs, Theron, Pomerode/SC (BR); Möschl, Holger, 95100 Selb (DE); Weiland, Lars-Peter, 95173 Schönwald (DE); Devegili, Sergio, 89107000 Pomerode, SC (BR)
(74) Vertreter: Benninger, Johannes

(56) Entgegenhaltungen:
- CH-A- 291 175
- DE-A1- 2 313 626
- DE-A1- 19 638 710
- DE-T2- 69 835 115
- JP-A- 2010 075 891
- US-A- 2 915 023

## Beschreibung

Die vorliegende Erfindung betrifft eine Anlage und ein Verfahren zur Herstellung und / oder Aufbereitung von Confectionery- Masse gemäß den Merkmalen der Oberbegriffe der Ansprüche 1 und 11.

Die Erfindung betrifft eine Anlage und ein Verfahren zur Herstellung und / oder Aufbereitung von Confectionery- Massen. Unter Confectionery- Massen versteht man insbesondere die Grundzusammensetzung von vielen Süßwaren, beispielsweise Schokolade, Pralinen, zart schmelzende Umhüllungen, leckere Brotaufstriche, Füllmassen und so weiter.

Bislang lag der Schwerpunkt in der Produktionsplanung hauptsächlich auf einem hohen Produkt- Durchsatz. Da bei einem Produktwechsel die Anlage jeweils vollständig gereinigt werden muss, um Produktreste im System oder Effekte durch Kreuzkontaminationen auszuschließen, wurde insbesondere eine geringere Produktvielfalt in Kauf genommen. Das verringert nicht nur die Flexibilität bei der Umstellung von Produktlinien, sondern auch die Auslastung der Anlagen und damit die Wirtschaftlichkeit.

Im Vergleich zur milchverarbeitenden Industrie, zur Getränkeindustrie oder gar zur Pharmaindustrie genießen die Süßwarenhersteller in punkto nachweisbar keimfreier Produktion bislang einen klaren Vorteil: Kakao wirkt wie ein Antioxidans, Zucker wie ein natürliches Konservierungsmittel und der Wassergehalt der meisten Confectionery- Massen ist sehr gering. Dadurch ist die mögliche Verkeimungsgefahr der Produkte extrem gering. Dies resultiert unter anderem daher, dass im Vergleich zu vielen anderen industriellen Produktionsabläufen in der Süßwarenindustrie mit hohen Temperaturen und in trockener Umgebung gearbeitet wird. Die dominierenden Rohstoffe wie Zucker, Kakao und die meisten Fette sind grundsätzlich mikrobiologisch unkritisch.

Dessen ungeachtet legt der moderne Konsument auch bei den emotional geprägten Confectionery-Produkten gesteigerten Wert auf Qualitätssicherheitsowohl bei den Rohstoffen als auch erst recht bei der Verarbeitung. Für die Hersteller bedeutet das im Einzelnen, dass die Nachfrage nach hochwertigen, hygienisch verarbeiteten Produkten zunehmen wird. Weiterhin steigen auch die Anforderungen nach transparenter und lückenloser Information über die Produkte und ihre Herstellprozesse. Ferner dürften auch amtliche Überwachungsstellen die Hygiene und Qualität in der Produktion von Confectionery-Massen in Zukunft strenger bewerten. Insgesamt ist davon auszugehen, dass die Anforderungen für die Produktionsanlagen künftig höher liegen werden als bisher.

Weiterhin diversifizieren die Produktprogramme der Hersteller zunehmend, wobei die jeweiligen Stückzahlen sinken. Demzufolge gewinnen Wirtschaftlichkeit und Wirksamkeit von Reinigungsprozeduren und Reinigungsvorrichtungen immer mehr an Bedeutung. Herkömmlicherweise müssen bei einem Produktwechsel alle Komponenten einer Anlage auseinander genommen, gereinigt, getrocknet und anschließend wieder zusammengesetzt werden. Dies ist sehr zeit- und kostenintensiv. Insbesondere muss darauf geachtet werden, dass keine Feuchtigkeit in die Anlage gelangt, da dies die Gefahr von Keimbildung mit sich bringt.

Aus der DE 196 38 710 A1 sind ein Verfahren und eine Vorrichtung zum Einbringen einer Substanz in eine Conche bekannt, welche Sprühdüsen verwendet.

DE 19637098 A1 beschreibt eine Vorrichtung zum Mischen und / oder Verfeinern von Schokoladenmassen. Hierbei kann ein im Wesentlichen der Luft ausgesetzter, sich entlang seiner Längsachse erstreckender Kanal mit dem Conchenbehälter verbunden sein. In Verlängerung dieser Längsachse kann ein Reinigungswerkzeug in den Kanal eingeführt werden.

DE 69002057 T2 beschreibt einen Reaktor für die Behandlung von flüssigem Kakao und seinen Derivaten. Bei dem Reaktor ist die Pumpe der Umlaufeinrichtungen außerhalb des Behälters angebracht und wird von Einrichtungen angetrieben, die von den Antriebseinrichtungen für die drehende Welle getrennt sind. Ferner weisen die Umlaufeinrichtungen eine Saugleitung auf, die den besagten Auslauf an dem Behälter mit der Pumpe verbindet, und eine Förderleitung von der Pumpe bis zum Inneren des Behälters und Einrichtungen für das Einführen von Medien in den flüssigen Kakao sind mit der besagten Saugleitung verbunden. Die besagten Einrichtungen für das Einführen von Medien können insbesondere Einrichtungen für das Einführen von Wasser oder von wässerigen Lösungen und/oder Einrichtungen für das Einführen von Luft aufweisen. Um den Reaktor einfach entleeren zu können, sieht eine besondere Art der Ausführung vor, dass die Pumpe reversibel ist, dass der erste Dreiwegschieber in der besagten Saugleitung angeordnet ist, und dass die besagte Förderleitung einen Boden des Behälters in der Nähe einer tiefen Stelle dieses Bodens durchquert und Öffnungen aufweist, die mit dem Inneren des Behälters in Verbindung stehen und die Entleerung der Stoffe, die sich an der besagten tiefen Stelle abgesetzt haben, durch Absaugung ermöglichen.

Aufgabe der Erfindung ist es, eine Anlage und ein Verfahren zur Herstellung und / oder Aufbereitung von Confectionery- Massen bereitzustellen, die eine wirtschaftliche und hygienische Produktion auch kleiner Mengen an Confectionery-Massen erlaubt.

Die obige Aufgabe wird durch eine Anlage und ein Verfahren zur Herstellung und / oder Aufbereitung von Confectionery- Massen gelöst, die die Merkmale in den Patentansprüchen 1 und 11 umfassen. Weitere vorteilhafte Ausgestaltungen werden durch die Unteransprüche beschrieben.

Die Erfindung betrifft eine Anlage zur Herstellung und / oder Aufbereitung von Confectionery- Massen aus mindestens einem flüssigen Rohstoff und körnigen und / oder pulverförmigen Rohstoffen. Bei dem flüssigen Rohstoff handelt es sich in der Regel um ein Fett und / oder Öl. Vielfach werden Fette verwendet, die bei normaler Raumtemperatur in einem festen Zustand vorliegen. Diese müssen vor der Zugabe zu den körnigen und / oder pulverförmigen Rohstoffen aufgeschmolzen werden. Die körnigen und / oder pulverförmigen Rohstoffe sind beispielsweise Kristallzucker und / oder Puderzucker, Kakao oder dergleichen. Weiterhin kann die Zugabe von Lecithin oder anderen geeigneten Emulgatoren vorgesehen sein, die ein Vermischen des flüssigen mit den körnigen und / oder pulverförmigen Rohstoffen erleichtern. Weiterhin dient Lecithin der Qualitätssteigerung bei der Schokoladen- und Confectionary-Produktion. Beispielsweise wird durch den Einsatz von Lecithin die Viskosität einer Schokoladen oder Confectionary- Zusammensetzung herabgesetzt, wodurch die Bearbeitungszeit verkürzt und Kakaobutter eingespart werden kann. Weiterhin werden auch die Produkteigenschaften günstig beeinflusst. Die Schokolade wird widerstandsfähiger gegenüber erhöhten Temperaturen, die Haltbarkeit wird verlängert, der Glanz der Oberfläche wird erhöht und ein vorzeitiges Vergrauen wird vermindert.

Die Anlage umfasst mindestens einen ersten Mischbehälter mit einer Mischvorrichtung zum zumindest weitgehend homogenen Vermischen der Rohstoffe. Um die Rohstoffe in den ersten Mischbehälter einzufüllen, weist dieser mindestens einen Rohstoffeinlass und einen Produktauslass auf. Die Anlage kann weitere produktverarbeitende Einrichtungen umfassen, insbesondere mindestens eine Mahlvorrichtung zum Vermahlen der körnigen und / oder pulverförmigen Bestandteile der Rohstoffmischung. Beispielsweise kann eine vorzerkleinernde Mahlvorrichtung vorgesehen sein, mit der körnige Rohstoffe vor dem Einfüllen in den Mischbehälter vorvermahlen werden. Weiterhin kann eine nachgeordnete Mahlvorrichtung zum Feinvermahlen der in dem Mischbehälter mit dem Fett und / oder Öl vermischten körnigen und / oder pulverigen Rohstoffen vorgesehen sein. Bei der nachgeordneten Mahlvorrichtung kann es sich beispielsweise um eine Kugelmühle, eine Rührwerkskugelmühle oder auch um Walzwerke handeln, insbesondere Dreiwalzwerke oder Fünfwalzwerke. Diese Walzwerke werden auch als Dreiwalzstuhl oder Fünfwalzstuhl bezeichnet.

Erfindungsgemäß weist der erste Mischbehälter in einem oberen Behälterbereich mindestens eine Sprüheinrichtung zur Zuführung des mindestens einen flüssigen Rohstoffs in den Mischbehälter auf. Die Sprüheinrichtung kann insbesondere dem Deckel des Mischbehälters zugeordnet sein, beispielsweise kann die Sprüheinrichtung am Deckel des Mischbehälters hängend angeordnet sein. Der Austrittskegel, mit dem der flüssige Rohstoff vom Sprühkopf aus in den Mischbehälter eingesprüht wird, ist dabei zumindest bereichsweise in Richtung einer Innenwandfläche des ersten Mischbehälters gerichtet und deckt die gesamte Innenwandfläche und / oder Deckenfläche im oberen Behälterbereich des ersten Mischbehälters zumindest weitgehend vollständig ab. Vorzugsweise sind im oberen Bereich des ersten Mischbehälters mindestens zwei oder mehr Sprühköpfe angeordnet, deren Austrittskegel in ihren aneinandergrenzenden Randbereichen überlappen, so dass der flüssige Rohstoff die Innenwandflächen im oberen Behälterbereich des ersten Mischbehälters weitgehend vollständig benetzt. Der flüssige Rohstoff wird vorzugsweise unter Druck über die Sprüheinrichtung auf die Innenwandflächen des Mischbehälters aufgesprüht.

Die körnigen und / oder pulverförmigen Rohstoffe tendieren dazu, beim Einfüllen in den Mischbehälter zu stauben und sich dann insbesondere an den oberen Innenwandflächen des ersten Mischbehälters festzusetzen, die im befüllten Zustand ersten des Mischbehälters nicht mit der Rohstoffmischung in Kontakt sind. Der erste Mischbehälter wird insbesondere nicht vollständig befüllt, sondern nur bis zu maximal 80% seinen Behälterinnenvolumens, da bei einer Befüllung des Behälterinnenvolumens zu mehr als 80% ein Vermischen der Rohstoffe durch die Mischvorrichtung nur schwer möglich wäre. Durch das Einsprühen des flüssigen Rohstoffs in einen oberen Bereich des ersten Mischbehälters wird verhindert, dass sich noch nicht mit dem flüssigen Rohstoff vermischte beziehungsweise durch den flüssigen Rohstoff gebundene körnige und / oder pulverförmige Rohstoffe an den Innenwandflächen im oberen Behälterbereich des ersten Mischbehälters festsetzen. Der Innenraum des ersten Mischbehälters kann weiterhin dergestalt ausgebildet sein, dass er vorzugsweise keine Ecken und / oder Kanten sondern vorzugsweise nur Rundungen aufweist, in denen sich die Rohstoffmischung beziehungsweise einzelne Rohstoffe nur schwer festsetzen können. Weiterhin können die Innenwand-Oberflächen antihaftende Eigenschaften aufweisen, beispielsweise sind die Innenwand- Oberflächen elektropoliert und / oder mit einer Antihaft- Beschichtung versehen.

Gemäß der Erfindung ist die mindestens eine Sprüheinrichtung, vorzugsweise jedoch sind die mindestens zwei oder drei Sprüheinrichtungen, schwenkbeweglich und / oder rotationsbeweglich. Dadurch kann der Bereich der Innenwandflächen, die mit dem flüssigen Rohstoff besprüht und benetzt werden, weiter erhöht und eine vollumfängliche Abdeckung erzielt werden.

Gemäß einer weiteren Ausführungsform der Erfindung kann vorgesehen sein, dass der Rohstoffeinlass für die körnigen und / oder pulverförmigen Rohstoffe zwar in einem oberen Behälterbereich des ersten Mischbehälters angeordnet ist, insbesondere in einem Bereich oberhalb des maximalen Füllstands des ersten Mischbehälters, jedoch unterhalb der mindestens einen Sprüheinrichtung. Dadurch kann vermieden werden, dass flüssiger Rohstoff und / oder Rohstoffgemisch in den Rohstoffeinlass für die körnigen und / oder pulverförmigen Rohstoffe gelangt. Gemäß einer alternativen Ausführungsform der Erfindung befindet sich der Rohstoffeinlass für die körnigen und/ oder pulverförmigen Rohstoffe in etwa auf derselben Höhe oder über der mindestens einen Sprüheinrichtung.

Weiterhin ist bei der Anlage vorgesehen, dass zwei prozesstechnisch miteinander gekoppelte produktverarbeitende Einrichtungen jeweils über eine Verbindungsleitung, insbesondere jeweils über eine die zwei produktverarbeitenden Einrichtungen verbindende Ringleitung, miteinander gekoppelt sind. Über die Verbindungsleitung wird die Rohstoffmischung oder Produktmischung von der einen produktverarbeitenden Einrichtung in die zweite prozesstechnisch gekoppelte produktverarbeitende Einrichtung geleitet, beispielsweise gepumpt. Gemäß einer Ausführungsform der Erfindung wird die Rohstoffmischung aus dem ersten Mischbehälter über eine Verbindungsleitung in eine nachfolgende produktverarbeitende Einrichtung gepumpt. In der Verbindungsleitung kann ein innerhalb der Verbindungsleitung bewegliches Reinigungselement angeordnet sein, dem zudem eine so genannte Parkposition zugeordnet ist. Das Reinigungselement wird verwendet, um die Verbindungsleitung von den gegebenenfalls an den Innenwandflächen der Verbindungsleitung anhaftenden Rückständen der körnigen und / oder pulverförmigen Rohstoffe der Rohstoffmischung zu befreien. Die Abmessungen des Reinigungselementes sind dem Durchmesser der Verbindungsleitung angepasst, so dass das Reinigungselement an der Innenwand der Verbindungsleitung anhaftenden Belag ablösen kann. Beispielsweise weist das Reinigungselement zumindest bereichsweise einen Querschnitt auf, der annähernd einem Querschnitt der Verbindungsleitung entspricht. Insbesondere ist vorgesehen, dass zumindest zwischen einem Teil des Reinigungselements und der Innenwandung der Verbindungsleitung kein oder nur ein geringes Spiel ausgebildet ist. Das Reinigungselement wird beispielsweise durch Druckluft angetrieben, die in die Verbindungsleitung eingebracht wird. Es können auch andere geeignete Fluide mit einem definierten Druck eingesetzt werden. Während das Reinigungselement die Verbindungsleitung beziehungsweise Ringleitung in dem Bereich zwischen dem Mischbehälter und der nachfolgenden produktverarbeitenden Einrichtung durchläuft, schiebt es in der Verbindungsleitung möglicherweise vorhandene Rohstoffmischung vor sich her. Diese wird sodann durch Öffnungen in der Verbindungsleitung im Bereich der nachfolgenden produktverarbeitenden Einrichtung in die produktverarbeitende Einrichtung überführt. Das Reinigungselement wird anschließend weiter in seine Parkposition befördert.

Gemäß einer bevorzugten Ausführungsform der Anlage umfasst die Anlage einen Mischbehälter, eine Veredelungsvorrichtung, einen Prozessbehälter und eine Mahlvorrichtung. Zumindest zwischen dem Mischbehälter und dem Prozessbehälter, dem Prozessbehälter und der Veredelungsvorrichtung und / oder zwischen dem Prozessbehälter und der Mahlvorrichtung ist jeweils eine Verbindungsleitung, beispielsweise in Form einer Ringleitung, mit Reinigungselement vorgesehen. Somit können die Verbindungsleitungen zwischen dem Mischbehälter und der Veredelungsvorrichtung und / oder zwischen dem Mischbehälter und dem Prozessbehälter und / oder zwischen dem Prozessbehälter und der Mahlvorrichtung jeweils sauber von der Rohstoff- und / oder Produktmischung gehalten werden.

Gemäß einer bevorzugten Ausführungsform der Erfindung ist die Anlage als Kompaktanlage ausgebildet. Die Anlage umfasst einen Vorratsbehälter für vorgewärmtes, flüssiges Fett, einen ersten Mischbehälter, einen zweiten Prozessbehälter, eine Veredelungsvorrichtung und eine Mahlvorrichtung. Diese produktverarbeitenden Einrichtungen der Anlage sind in einem umgebenden Gehäuse zusammengefasst. Die produktverarbeitenden Einrichtungen der Anlage sowie die Verbindungsleitungen zwischen den produktverarbeitenden Einrichtungen sind vorzugsweise beheizt, um während des gesamten Produktionsprozesses die dafür notwendige Temperierung zu ermöglichen.

Eine Seitenfläche und die Oberseite des Gehäuses der Anlage sind als Bedienerseiten ausgebildet. Insbesondere ist die Bedienerseite an der Oberseite des Gehäuses als Arbeitsbereich für einen menschlichen Bediener ausgebildet. Das Gehäuse umfasst in diesem Arbeitsbereich eine erste Einfülleinrichtung für körnige und / oder pulverförmige Rohstoffe und eine zweite Einfülleinrichtung für einen Rohstoff Fett. Die erste Einfülleinrichtung ist beispielsweise als Einfülltrichter für die körnigen und / oder pulverförmigen Rohstoffe ausgebildet. Dieser ist oberhalb des ersten Mischbehälters angeordnet und bildet einen direkten Zugang zum ersten Mischbehälter. Vorzugsweise ist in dem Zugang eine Schutzeinrichtung vorgesehen, beispielsweise eine Schleusenklappe oder Ähnliches, die verhindert, dass eine Staubwolke aus körnigen und / oder pulverförmigen Rohstoffen gebildet wird, die aus der ersten Einfülleinrichtung austritt und somit den Arbeitsbereich beziehungsweise die Umgebung der Anlage verschmutzt. Die zweite Einfülleinrichtung ist oberhalb des Vorratsbehälters für das vorgewärmte, flüssige Fett angeordnet und bildet vorzugsweise einen direkten Zugang zu dem Vorratsbehälter.

Das als flüssiger Rohstoff verwendete Fett ist in der Regel bei Raumtemperatur fest und muss aufgeschmolzen werden. Die zweite Einfülleinrichtung umfasst zu diesem Zweck eine Schmelzvorrichtung zum Aufschmelzen von in fester Form bereitgestellten Fetten, beispielsweise wird das Fett innerhalb der zweiten Einfülleinrichtung auf einem beheizbaren Aufgabegitter aufgeschmolzen und von einem Auffanggefäß direkt in den beheizten Vorratsbehälter überführt. Da das Aufschmelzen des Fettes den zeitintensivsten Schritt in der Produktion darstellt, kann vorgesehen sein, dass die Kapazität des Vorratsbehälters für zwei Rohstoff- Ansätze beziehungsweise Chargen im Mischbehälter ausreicht. Beispielsweise können nur bis zu 120kg Fett gleichzeitig aufgeschmolzen werden, während für einen Gesamtansatz einer Confectionary- oder Schokoladen- Zusammensetzung 300 Liter geschmolzenes Fett benötigt werden. Der Vorratsbehälter für das aufgeschmolzene Fett fasst beispielsweise ein Volumen von ca. 500 Liter. Während somit ein Rohstoff- Ansatz beziehungsweise eine Charge im Mischbehälter und / oder in anderen Einrichtungen der Anlage verarbeitet wird, kann der Bediener bereits weiteres Fett in der zweiten Einfülleinrichtung aufschmelzen.

Weiterhin kann vorgesehen sein, dass die Anlage ein Aufzugmittel für die Bereitstellung von Rohstoffen umfasst. Die Rohstoffe für einen Ansatz können dabei beispielsweise auf einer Palette zusammengestellt und über das Aufzugmittel dem Arbeitsbereich zugeführt werden. Das Aufzugmittel erleichtert die Bereitstellung der Rohstoffe an den Einfülleinrichtungen, die sich gemäß obiger Beschreibung an der Oberseite des Gehäuses befinden. Das Aufzugmittel ist insbesondere von zwei Seiten her zugänglich, nämlich von einer seitlichen Bedienerseite zum Bestücken des Aufzugsmittels mit Rohstoffen und vom Arbeitsbereich auf der Oberseite des Gehäuses aus, zur Entnahme der Rohstoffe durch den Bediener. Beispielsweise ist das Aufzugmittel derart angebracht, dass an der seitlichen Bedienerseite eine beladene Euro- Palette mit allen für eine vorgegeben Rezeptur notwendigen Rohstoffen in das mit Türen verschließbare Aufzugmittel eingebracht werden kann. Die mit den Rohstoffen beladene Palette wird beispielsweise durch einen Gabelstapler in dem Aufzugmittel abgesetzt. Das Aufzugmittel wird dann vom Benutzer gesteuert derart positioniert, dass der Benutzer die Rohstoffe im Arbeitsbereich bequem entnehmen kann. Insbesondere ist die vertikale Position des Aufzugsmittels einstellbar und das Aufzugsmittel kann derart zwischen der ersten und der zweiten Einfülleinrichtung positioniert werden, dass der Bediener die Rohstoffpakete oder Rohstoffsäcke nicht anheben muss, sondern einfach auf eine den jeweiligen Einfülleinrichtungen zugeordnete Arbeitsfläche überschieben kann. Beispielsweise umfasst das Aufzugsmittel einen Hubtisch, der von dem Bediener über eine Zweihandbedienung in der richtigen Höhe positioniert werden kann. Die Verwendung einer Zweihandbedienung stellt eine zusätzliche Sicherheitsvorkehrung dar, da diese gewährleistet, dass sich der Bediener außerhalb des Gefahrenbereichs des Aufzugsmittels befindet.

Gemäß einer Ausführungsform werden die Fette von der Palette aus einem Karton entnommen und der Fettblock wird in die zweite Eingabevorrichtung entleert, wo der Fettblock auf dem Aufgabegitter aufgeschmolzen und das flüssige Fett anschließend in den Vorratsbehälter überführt wird. Das Aufgabegitter kann vom Bediener weg nach unten geneigt sein, so dass die Fettblöcke automatisch auf dem beheizten Aufgabegitter bis an die Rückwand des Fettschmelzers der zweiten Eingabevorrichtung gleiten. Alternativ werden Öle aus ihren Verpackungseinheiten in die zweite Eingabevorrichtung und somit direkt in den Vorratsbehälter gegeben.

Die erste Eingabevorrichtung stellt das Zugabefach für die restlichen körnigen und / oder pulverförmigen Rohstoffe dar. Dabei handelt es sich beispielsweise um Kristallzucker, Kakaopulver, Milchpulver etc. Der Bediener überführt die Säcke von dem Aufzugmittel in Richtung der ersten Eingabevorrichtung für körnige und / oder pulverförmige Rohstoffe. Anschließend werden die Säcke durch den Bediener geöffnet und in die erste Eingabevorrichtung entleert. Beispielsweise kann die erste Eingabevorrichtung einen Trichter mit einer erweiterten Öffnung zum erleichterten Einfüllen umfassen. Unterhalb des Trichters kann sich eine Schleusenklappe befinden, die während des Pulveraufgabevorganges geöffnet ist. Die körnigen und / oder pulverförmigen Rohstoffe werden über den Rohstoffeinlass des Mischbehälters direkt in den ersten Ansatz- bzw. Mischbehälter eingefüllt.

Beispielsweise kann vorgesehen sein, dass im Arbeitsbereich ein Bedienterminal vorgesehen ist. Über dieses kann der Bediener beispielsweise das Aufzugmittel steuern. Weiterhin enthält das Bedienterminal das Rezept für den jeweiligen Ansatz und / oder stellt dieses für den Bediener dar. Weiterhin kann das Bedienterminal dem Bediener Anweisungen geben, zu welchem Zeitpunkt er welche Rohstoffe zugeben soll. Beispielsweise können akustische Hilfsmittel vorgesehen sein, die ebenfalls durch das Bedienterminal ausgebbar sind. Weiterhin kann vorgesehen sein, dass der Bediener über das Bedienterminal die Komponenten der Anlage prüfen kann und beispielsweise Fehlermeldungen erhält, wenn Störungen im Produktionsbetrieb auftreten, beispielsweise wenn Heizelemente und / oder Pumpen ausfallen etcetera.

Die kleine kompakte Anlage mit Aufzugmittel und manueller Bedienung ist insbesondere für Produktchargen von bis zu 1000 kg vorgesehen. Es ist jedoch auch denkbar, die Anlage entsprechend größer zu konstruieren, in denen Chargen von mehr als 1000 kg bearbeitet werden können. Die Zufuhr der einzelnen Rohstoffe kann dann über geeignete Fördermittel, beispielsweise Förderbänder, Förderschnecken etcetera erfolgen. Insbesondere kann bei größer dimensionierten Anlagen auch eine automatisierte Dosierung der Rohstoffe über eine Steuerung in Verbindung mit einer Wiegestation und weiteren geeigneten Einrichtungen oder ähnliches vorgesehen sein.

Die Erfindung betrifft weiterhin ein Verfahren zur Herstellung und / oder Aufbereitung von Confectionery- Massen, insbesondere in einer oben beschriebenen Anlage, wobei in einem ersten Mischbehälter mindestens ein flüssiger Rohstoff mit körnigen und / oder pulverförmigen Rohstoffen vermischt wird und wobei die Rohmischung in mindestens einer weiteren produktverarbeitenden Einrichtung in zumindest einem weiteren Verfahrensschritt weiterverarbeitet wird, insbesondere wobei die Rohmischung in einer Mahlvorrichtung feinvermahlen wird. Erfindungsgemäß wird der flüssige Rohstoff über mindestens eine Sprüheinrichtung in einen oberen Behälterbereich des Mischbehälters eingesprüht. Insbesondere wird der flüssige Rohstoff derart unter Druck eingesprüht oder eingespritzt, dass der flüssige Rohstoff zumindest bereichsweise die Innenwandflächen in einem oberen Behälterbereich des ersten Mischbehälters zumindest weitgehend vollständig benetzt. Unter oberen Behälterbereich des Mischbehälters versteht man insbesondere einen Bereich der sich oberhalb der Maximalbefüllung des Mischbehälters befindet. Insbesondere ist vorgesehen, dass die Sprüheinrichtung zu keinem Zeitpunkt in einen Rohstoffansatz eintaucht.

Gemäß der Erfindung wird eine Teilmenge des gemäß einer vorgegebenen Rezeptur notwendigen flüssigen Rohstoffs mit den gemäß der Rezeptur notwendigen gesamten körnigen und / oder pulverförmigen Rohstoffen zu einem ersten Teilgemisch vermischt. Insbesondere wird zuerst eine Teilmenge an flüssigem Rohstoff aus dem Vorratsbehälter in den Mischbehälter eingespritzt oder eingesprüht und anschließend werden die Feststoffe direkt in den Mischbehälter eingefüllt. In dem Mischbehälter bewegt sich eine Mischer- bzw. Dissolverscheibe, die die Rohstoffe kontinuierlich und gleichmäßig mit dem flüssigen Rohstoff, das heißt mit dem vorgelegten, temperierten Fett, vermischt. Aus einem zusätzlichen separaten, gegebenenfalls ebenfalls beheizbaren Vorratsbehälter können weitere Additive wie Lecithin oder Ähnliches mittels Dosierpumpen zugegeben werden. Dies kann je nach ausgewählter Rezeptur automatisch oder durch den Bediener erfolgen. Durch die separate Aufgabemöglichkeit von pulverförmigen und / oder körnigen Rohstoffen, fetthaltigen, flüssigen Rohstoffen und Additiven werden wirksam Anbackungen beziehungsweise Verklebungen an den Zugabefächern der Eingabevorrichtungen verhindert.

Gemäß einer Ausführungsform der Erfindung wird zuerst das Rührwerk, insbesondere die Mischer- bzw. Dissolverscheibe, im Mischbehälter bewegt und flüssiges Fett aus dem Vorratsbehälter über den mindestens einen Sprühkopf in den Mischbehälter eingefüllt. Beispielsweise werden zirka 2/3 des für einen Ansatz benötigten Fetts eingefüllt. Bei einem Ansatz mit 300 Liter Fett, werden also in einem ersten Verfahrensschritt nur 200 Liter des Fetts über den Sprühkopf in den Mischbehälter eingefüllt. Alternativ kann das flüssige Fett auch aus einem Restmassebehälter entnommen werden. Der Restmassebehälter enthält Fett, das bei einer Reinigung der Anlage verwendet worden ist und das Verunreinigungen mit Rohstoffen einer alten Produktcharge aufweisen kann.

Anschließend werden die pulverförmigen und / oder körnigen Rohstoffen in den Mischbehälter eingefüllt, in dem sich beispielsweise ein Klappenventil unter dem Aufgabetrichter der ersten Eingabevorrichtung öffnet. Dem Bediener wird beispielsweise über das Bedienterminal angezeigt, welcher Rohstoff zu welchem Zeitpunkt in welcher Menge in den Aufgabetrichter der ersten Eingabevorrichtung eingefüllt werden muss. Beispielsweise ist für das erleichterte Vermischen der Rohstoffe die Reihenfolge, in denen diese zugemischt werden, von Bedeutung. So kann vorgegeben werden, dass zuerst Zucker, anschließend Milchpulver und danach Kakaopulver eingefüllt werden muss. Nachdem die pulverförmigen und / oder körnigen Rohstoffen eingefüllt sind, schließt das Klappenventil und über eine Pumpe kann Lecithin oder ein anderer Zusatzstoff aus einem eigenen Vorratsbehälter zu dem Rohstoffgemisch im Mischbehälter dazu dosiert werden und die Mischung wird für eine bestimmte Zeit im Mischbehälter durch das Rührwerk durchmischt.

Anschließend wird das Teilgemisch über eine Verbindungsleitung in einen zweiten Prozessbehälter überführt. Beispielsweise wird ein Rührwerk in dem zweiten Prozessbehälter eingeschaltet und das Teilgemisch von dem ersten Mischbehälter in den zweiten Prozessbehälter gepumpt. Nachdem der Mischbehälter entleert worden ist, wird eine Restmenge des gemäß der vorgegebenen Rezeptur notwendigen flüssigen Rohstoffs über mindestens eine Sprüheinrichtung in einen oberen Behälterbereich des entleerten Mischbehälters eingesprüht, so dass die Innenwandfläche im oberen Behälterbereich des ersten Mischbehälters zumindest weitgehend vollständig benetzt wird. Anschließend wird die Restmenge des flüssigen Rohstoffs in den zweiten Prozessbehälter überführt. Dies kann gegebenenfalls mehrfach erfolgen, indem die gesamte Restmenge an flüssigem Rohstoff gemäß Rezept in mehrere Teil- Restmengen aufgeteilt wird. Mit dieser geringen Restfettmenge werden letzte Bestandteile aus dem Mischbehälter in den Prozessbehälter überführt und zugleich eine Zwischenreinigung der Innenwandung des Mischbehälters durchgeführt. Der erste Verfahrensschritt, bei dem der mindestens eine flüssige Rohstoff und die körnigen und / oder pulverförmigen Rohstoffe für die Zusammensetzung miteinander vermischt werden, wird somit sequentiell in mindestens zwei Schritten durchgeführt. Indem ein Teil des flüssigen Rohstoffs beziehungsweise flüssigen Fetts zurückbehalten wird und erst in den Mischbehälter eingespritzt wird, nachdem das Teilgemisch in den Prozessbehälter überführt worden ist, wird der Mischbehälter von möglicherweise im oberen Bereich an den Innenwandflächen anhaftendem Rohstoffstaub befreit. Da die Abreinigung von verklebten staubigen Rohstoffen bekanntermaßen abhängig von Geschwindigkeit und Zeit ist, kann vorgesehen sein, die Restmenge an flüssigem Rohstoff sequentiell und mit Druck auf die Innenwandflächen im oberen Behälterbereich aufzusprühen, damit die pulverförmigen Rohstoffe in Suspension gehen und somit zusammen mit der Restmenge an flüssigem Rohstoff abgeleitet beziehungsweise abgepumpt werden können.

In dem Prozessbehälter ist ebenfalls eine Mischvorrichtung angeordnet, beispielsweise ein Rührwerk in Form einer Mischwelle, welche die eingepumpte Rohstoffmischung kontinuierlich in Bewegung hält und so das Absetzen von Kristallzucker oder anderen grobkörnigen Komponenten vermeidet. Insbesondere werden in dem Prozessbehälter die Teilmenge aus flüssigem Rohstoff und festen Rohstoffen und die Restmenge(n) an flüssigem Rohstoff zu einem homogenen Produktgemisch vermischt. Der Prozessbehälter dient insbesondere auch als Puffer, von dem aus das Produktgemisch weiteren produktverarbeitenden Einrichtungen zugeführt werden kann. Aus dem bereits beschriebenen beheizbaren Vorratsbehälter für Additive wie beispielsweise Lecithin können diese Additive mit einer separaten Pumpe auch direkt in den Prozessbehälter zugegeben werden. Der Zeitpunkt der Additivzugabe kann somit frei gewählt werden und beispielsweise auch erst am Ende des Verarbeitungsprozesses erfolgen. In der Zwischenzeit könnte ein weiterer Ansatz im Mischbehälter vorbereitet werden, sofern es sich um dasselbe Produkt handelt, so dass keine Komplettreinigung der Anlage notwendig ist, um eine Verunreinigung des neuen Produktes mit alten Produktresten zu vermeiden.

Gemäß einer Ausführungsform der Erfindung wird die Verbindungsleitung zwischen dem ersten Mischbehälter und dem zweiten Prozessbehälter nach dem Überführen des Teilgemischs und / oder der Restmenge mittels eines bereits oben beschriebenen Reinigungselements durchlaufen und gereinigt. Insbesondere befördert das Reinigungselement das in der Verbindungsleitung befindliche Fett bis zur Abzweigung des Sprühkopfes. Die Verweilzeit des Reinigungselementes ist dabei so gewählt, dass der Sprühkopf leertropfen kann und der Mischbehälter durch eine Transferpumpe komplett leergepumpt ist. Anschließend fährt das Reinigungselement weiter durch die Verbindungsleitung zwischen erstem Mischbehälter und zweitem Prozessbehälter und drückt dadurch die Verbindungsleitung leer. Hierbei kann wiederum eine Verweilzeit des Reinigungselementes vor der Einfüllöffnung in den Prozessbehälter vorgesehen sein. Anschließend wird das Reinigungselement wieder in seine Parkposition gefahren.

Gemäß einer Ausführungsform der Erfindung kann das Produktgemisch anschließend aus dem zweiten Prozessbehälter in einer Veredelungseinrichtung weiterverarbeitet werden, insbesondere wird das Produktgemisch mehrfach im Kreislauf zwischen dem zweiten Prozessbehälter und der Veredelungseinrichtung gefördert. Beispielsweise erfolgt die Veredelung des Produktes durch Entlüften / Entfeuchten / Entgasen über einen Dünnschicht-Entlüfter / -Entfeuchter. Dies geschieht solange, bis die Entlüftung / Entgasung in Kombination mit der Geschmacksentwicklung des Produktes abgeschlossen ist. Im Dünnschicht-Entlüfter/ -Entfeuchter wird beispielsweise das Produktgemisch unter Vakuum in eine vorgewärmte, rotierende Trommel eingeleitet und bildet einen Dünnschichtfilm an der Innenseite der vorgewärmten, rotierenden Trommel, wobei Wasser aus dem Produktgemisch verdampft und andere Gase ebenfalls aus dem Produktgemisch herausgetrieben werden. Dabei werden auch flüchtige Bitterstoffe aus dem Produktgemisch entfernt.

Gemäß einer Ausführungsform wird eine Verbindungsleitung zwischen dem zweiten Prozessbehälter und der Veredelungseinrichtung während des Veredelungsprozesses mehrfach von einem Reinigungselement durchlaufen und dabei gereinigt. Zusätzlich oder alternativ wird eine Verbindungsleitung zwischen dem zweiten Prozessbehälter und der Veredelungseinrichtung nach Abschluss des Veredelungsprozesses von einem Reinigungselement durchlaufen und dabei gereinigt. Während das Produktgemisch in die Veredelungseinrichtung eingeleitet wird, wird das Reinigungselement vorzugsweise an der Veredelungseinrichtung vorbei geleitet. Wird kein weiteres Produkt mehr zur Veredelungseinrichtung gepumpt, wird diese trotzdem eine geringe Zeit weiter betrieben und entleert sich dadurch selbst.

In einem letzten Produktionsschritt wird das veredelte Produkt aus dem Prozessbehälter durch eine Mahlvorrichtung geleitet, um die gewünschte Endfeinheit des Produktes herzustellen bzw. zu gewährleisten. Bei der Mahlvorrichtung kann es sich beispielsweise um eine Kugelmühle, eine Rührwerkskugelmühle oder auch um Walzwerke handeln, insbesondere Dreiwalzwerke oder Fünfwalzwerke. Diese Walzwerke werden auch als Dreiwalzstuhl oder Fünfwalzstuhl bezeichnet.

Gemäß einer Ausführungsform der Erfindung wird als Mahlvorrichtung eine Rührwerkskugelmühle verwendet. Insbesondere wird veredeltes Produkt einer Rührwerkskugelmühle zugeführt wird, wobei die Befüllung der Rührwerkskugelmühle sensorisch ermittelt wird. Zu diesem Zweck wird eine bestimmte Menge an veredeltem Produkt in die Rührwerkskugelmühle eingebracht, bis an dem Materialausgang der Rührwerkskugelmühle ein Austritt an Produkt nachweisbar ist. Dies wird durch Sensoren gemessen. Die wichtigste Messgröße ist in diesem Fall die Temperatur, da die Produktaustrittstemperatur nach der Mühle höher ist als die Eintrittstemperatur (Temperatur zwischen 40° und 60°). Der Produktaustritt zeigt an, dass der Mahlraum der Rührwerkskugelmühle nunmehr komplett befüllt ist. Im nunmehr gefüllten Zustand wird die Rührwerkskugelmühle für eine vorbestimmte Zeit betrieben, ohne dass neues veredeltes Produkt hinzugepumpt bzw. in der Rührwerkskugelmühle befindliches Produkt abgepumpt wird. Das heißt nachdem sensorisch das Erreichen einer Maximalbefüllung der Rührwerkskugelmühle ermittelt worden ist, wird die weitere Produktzufuhr zumindest zeitweise unterbrochen und das in der Rührwerkskugelmühle befindliche veredelte Produkt in dieser vermahlen. Nach der vorgegebenen Zeit erreicht das Produkt somit seine gewünschte Endfeinheit. Nach dieser Zeit wird das Produkt weiter in den externen Fertig- Produkttank geleitet. Gleichzeitig wird das Zuführen von nicht gemahlenem Produkt aus dem Prozessbehälter fortgesetzt. Durch diese Vorgehensweise wird die Produktmenge reduziert, die aufgrund von sich ändernden Betriebsbedingungen in der Anfahrphase noch nicht der geforderten Qualität entspricht und die Vermahlung kann somit ohne nennenswerte Verluste bzw. Abfallmengen durchgeführt werden.

In einer alternativen Ausführungsform ist es wie in herkömmlichen Verfahren möglich, das zu vermahlende Produkt im Kreis zwischen Prozessbehälter und Mahlvorrichtung zu fahren. Wobei auch bei der Kreisfahrweise ein Verweilschritt in der Mahlvorrichtung vorausgehen sollte, um die gleichmäßige Qualität der gesamten Produktcharge zu gewährleisten. Bei der Kreisfahrweise kann weiterhin vorgesehen sein, dass während dieser Zeit noch Lecithin oder andere Additive in den Prozessbehälter eingepumpt und somit dem Produktgemisch zugeführt werden.

Je höher der Durchsatz von Produkt durch die Mahlvorrichtung, desto gröber verbleibt das Produkt. Dagegen führt ein geringerer Durchsatz zu einer längeren Verweilzeit des Produktes in der Mahlkammer der Mahlvorrichtung und somit zu einer feineren Vermahlung des Produktes.

Im Einlassbereich der Rührwerkskugelmühle kann sich weiterhin eine Vorzerkleinerungseinrichtung zur Vorzerkleinerung von Grobprodukten befinden, welche sogar in der Lage ist, Nüsse bzw. Keksbruch oder dergleichen zu zerkleinern und auf die optimale Eingangsfeinheit der Rührwerkskugelmühle einzustellen. Beispielsweise kann zu diesem Zeitpunkt ein Teil von Bruchmaterial im Sinne des Rework zugeführt werden. Unter Rework bzw. Nachbearbeitung von Süßwaren versteht man insbesondere das Sammeln und Wiederverwenden von Süßwaren-Produkten, die eine gegebene Spezifizierung nicht erfüllen. Beispielsweise weisen diese nicht die gewünschte Form auf, da sie zerbrochen sind oder Ähnliches. Das Bruchmaterial kann aber in geänderter Form wieder als Ausgangsmaterial für neue Süßwaren verwendet werden, wodurch Abfall beziehungsweise Ausschuss reduziert werden kann. Alternativ kann anstelle und / oder zusätzlich zum Dünnschicht-Entlüfter / -Entfeuchter eine Vorzerkleinerungseinrichtung integriert werden, um Bruchmaterial durch Rework mit einem Rohrstoffansatz zu verarbeiten.

Die Rührwerkskugelmühle ist mit Mahlkörpern gefüllt. Vorzugsweise handelt es sich dabei um Stahlkugeln mit magnetischen Eigenschaften. Diese werden am Produktauslass mittels einer Trennvorrichtung in der Rührwerkskugelmühle zurückbehalten. Allerdings kommt es immer wieder vor, dass Mahlkörper brechen und dann nicht mehr durch die Trennvorrichtung zurückbehalten werden. Aus diesem Grund ist nach dem Produktauslass ein Magnetfilter vorgesehen, der den Mahlkörperbruch aus dem feinvermahlenen Produkt herausfiltert.

Gemäß einer Ausführungsform der Erfindung wird eine Verbindungsleitung zwischen dem zweiten Prozessbehälter und der Mahlvorrichtung zumindest nach Entleeren des zweiten Prozessbehälters von einem weiteren Reinigungselement durchlaufen und gereinigt, insbesondere von einem Reinigungselement, wie es bereits oben beschrieben worden ist. Insbesondere kann vorgesehen sein, dass das Reinigungselement nach dem Abzweig zur Mahlvorrichtung in der den Prozessbehälter und die Mahlvorrichtung verbindenden Ringleitung stehen bleibt. Dadurch wird die Druckluft beziehungsweise das zum Antreiben des Reinigungselementes verwendete Fluid durch die Mahlvorrichtung geleitet und drückt das feinvermahlende Produkt aus der Mahlvorrichtung heraus. Anschließend wird das Reinigungselement wieder in eine Parkposition verfahren.

Die erfindungsgemäße Anlage ist eine kompakte Anlage, mit welcher in der Hauptsache Zusammensetzungen für die Confectionary- Herstellung produziert werden können, insbesondere Füllungen für Pralines, Brotaufstriche und andere Süßwaren. In einer besonderen Ausführungsform können mit der erfindungsgemäßen Anlage auch verschiedene Schokoladensorten hergestellt werden. Die Anlage kann auch für das so genannte Rework von Confectionary- Zusammensetzungen verwendet werden. Dabei handelt es sich beispielsweise um Waffelbruch, zerbrochene Pralines etcetera, die wieder aufgearbeitet und in neuen Produkten verarbeitet werden können.

Insbesondere handelt es sich nach erfolgter Rohstoffaufgabe um einen komplett geschlossenen Herstellungsprozess. Die erfindungsgemäße Anlage zeichnet sich dadurch aus, dass aus dem Stand der Technik bekannte Maschinen wie beispielsweise der Ansatz - oder Mischbehälter, Conchen und Rührwerkskugelmühlen in einem abgeschlossenen Umfeld auf- und / oder zusammengestellt sind. Insbesondere sind alle prozesstechnisch gekoppelten Einrichtungen von einem Gehäuse umgeben.

Die Produktion in der erfindungsgemäßen Anlage verläuft deutlich hygienischer, da einzelne oder alle die produktverarbeitenden Einrichtungen verbindende Rohrleitungsabschnitte zwischen den Verfahrensschritten komplett entleert und gesäubert werden können. Dies ist insbesondere vorteilhaft, da die Rohrleitungsabschnitte der Anlage in der Regel beheizt sind und sich bekannterweise schnell ein fester Film aus Ablagerungen an den Innenwandungen der Leitungen absetzt. Diese Ablagerung umfasst beispielsweise karamellisierten Zucker und andere Bestandteile der Produktmischungen. Durch das regelmäßige Reinigen der Rohrleitungsabschnitte nach jedem Verfahrensschritt und / oder auch während eines Verfahrensschritt können diese Ablagerungen wirksam verhindert werden.

Das Verfahren kann alternativ oder zusätzlich zu den beschriebenen Merkmalen ein oder mehrere Merkmale und / oder Eigenschaften der zuvor beschriebenen Anlage umfassen. Ebenfalls kann die Anlage alternativ oder zusätzlich einzelne oder mehrere Merkmale und / oder Eigenschaften des beschriebenen Verfahrens aufweisen.

Im Folgenden sollen Ausführungsbeispiele die Erfindung und ihre Vorteile anhand der beigefügten Figuren näher erläutern. Die Größenverhältnisse der einzelnen Elemente zueinander in den Figuren entsprechen nicht immer den realen Größenverhältnissen, da einige Formen vereinfacht und andere Formen zur besseren Veranschaulichung vergrößert im Verhältnis zu anderen Elementen dargestellt sind.
Figur 1 zeigt eine schematische Übersicht der Komponenten einer erfindungsgemäßen Anlage.
Figuren 2 bis 4 zeigen verschiedene Ansichten der Anlage.
Figur 5 zeigt eine Darstellung einer Anordnung der Komponenten einer erfindungsgemäßen Anlage von oben.
Figur 6 zeigt eine perspektivische Darstellung einer Anordnung der Komponenten einer erfindungsgemäßen Anlage.
Figur 7 zeigt eine perspektivische Darstellung einer Anordnung der Komponenten einer erfindungsgemäßen Anlage inklusive Darstellung von Rahmenelementen für das Gehäuse der Anlage.
Figur 8 zeigt einen Querschnitt durch eine erfindungsgemäße Anlage.
Figur 9 zeigt eine schematische Darstellung eines Ansatz- beziehungsweise Mischbehälters.
Figur 10 zeigt eine schematische Darstellung eines Prozessbehälters.
Figur 11 zeigt eine schematische Darstellung einer Rührwerkskugelmühle.
Figur 12 zeigt eine schematische Übersicht der Komponenten einer weiteren Ausführungsform einer erfindungsgemäßen Anlage.

Für gleiche oder gleich wirkende Elemente der Erfindung werden identische Bezugszeichen verwendet. Ferner werden der Übersicht halber nur Bezugszeichen in den einzelnen Figuren dargestellt, die für die Beschreibung der jeweiligen Figur erforderlich sind. Die dargestellten Ausführungsformen stellen lediglich Beispiele dar, wie die erfindungsgemäße Anlage oder das erfindungsgemäße Verfahren ausgestaltet sein können und stellen keine abschließende Begrenzung dar.

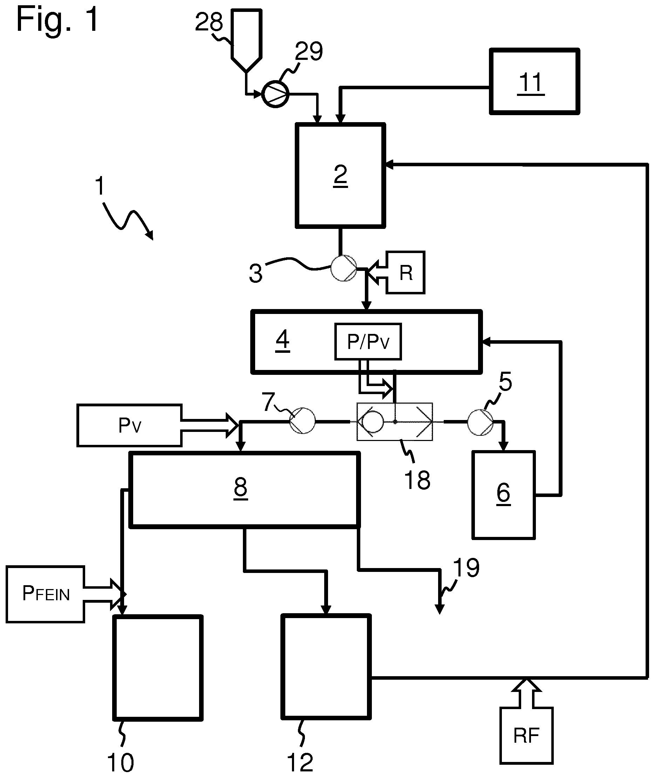

Figur 1 zeigt eine schematische Übersicht der Komponenten einer erfindungsgemäßen Anlage 1. Die für den Produktansatz der Confectionary- Masse benötigten Rohstoffe werden in einen Ansatz- beziehungsweise Mischbehälter 2 eingefüllt. Im Folgenden wird der Ansatz- beziehungsweise Mischbehälter 2 nur mit Mischbehälter 2 bezeichnet. Hierbei wird insbesondere das Fett vorgewärmt und in einem Fettvorlagebehälter 11 gespeichert, bevor es flüssig in den Mischbehälter 2 eingefüllt wird. Die restlichen Rohstoffe, beispielsweise Kristallzucker, Kakaopulver, Milchpulver und so weiter werden, vorzugsweise in fester Form, insbesondere pulverförmig, zugegeben. In dem Mischbehälter 2 werden die Rohstoffe kontinuierlich und gleichmäßig mit dem vorgelegten, temperierten Fett vermischt. Aus einem zusätzlichen separaten und gegebenenfalls beheizbaren Vorratsbehälter 28 können Additive wie Lecithin oder Ähnliches mittels einer Dosierpumpe 29 zugegeben werden. Nachdem alle pulverförmigen Rohstoffe im Fett eingemischt sind, wird das Rohstoffgemisch R vermittels geeigneter Pumpen 3 in einen Prozessbehälter 4 überführt. Im Prozessbehälter 4 wird die eingepumpte Mischung kontinuierlich in Bewegung gehalten, um das Absetzen von Kristallzucker oder anderen grobkörnigen Komponenten zu vermeiden. Durch das weitere Vermischen im Prozessbehälter 4 wird das Produktgemisch P gebildet.

Als nächster Prozessschritt erfolgt eine Veredelung des Produktgemisches P, beispielsweise durch ein Entlüften und / oder Entfeuchten und / oder Entgasen. Die Veredlung erfolgt im dargestellten Ausführungsbeispiel durch einen Dünnschicht-Entlüfter beziehungsweise -Entfeuchter 6, durch den Wasser und / oder flüchtige Bitterstoffe aus dem Produktgemisch P entfernt werden, so dass veredeltes Produkt Pv gebildet wird. In einer bevorzugten Ausführungsform wird das Produktgemisch P über einen Dünnschicht-Entlüfter / -Entfeuchter 6 zur Entlüftung gefahren. Hierzu wird das Produktgemisch P aus dem Prozessbehälter 4 insbesondere im Kreislaufverfahren durch den Dünnschicht-Entlüfter / -Entfeuchter 6 gefahren. Dies geschieht solange, bis die Entlüftung / Entgasung in Kombination mit der gewünschten Geschmacksentwicklung abgeschlossen ist. Beispielsweise wird das Produktgemisch P mittels einer geeigneten Pumpe 5 von dem Prozessbehälter 4 zu dem Dünnschicht-Entlüfter / -Entfeuchter 6 gepumpt und anschließend wieder in den Prozessbehälter zurückgeleitet- Alternativ wird das Produktgemisch P mittels einer geeigneten Pumpe 5 von dem Prozessbehälter 4 zu dem Dünnschicht-Entlüfter /-Entfeuchter 6 gepumpt und anschließend mit einer weiteren Pumpe (nicht dargestellt) von dem Dünnschicht-Entlüfter / -Entfeuchter 6 zu dem Prozessbehälter 4 zurück gepumpt.

Aus dem bereits beschriebenen beheizbaren Vorratsbehälter 28 für Additive wie z.B. Lecithin können mit einer separaten Pumpe 29* Additive auch direkt in den Prozessbehälter 4 zugegeben werden. Der Zeitpunkt dieser Additivzugabe kann frei gewählt werden und z.B. auch erst am Ende des Prozesses erfolgen.

In einem letzten Produktionsschritt wird das veredelte Produkt Pv aus dem Prozessbehälter 4 in eine Rührwerkskugelmühle 8 überführt. Beispielsweise wird das veredelte Produkt Pv mittels einer geeigneten Pumpe 7 in die Rührwerkskugelmühle gepumpt 8. Gemäß einer Ausführungsform ist zwischen dem Prozessbehälter 4 und dem Dünnschicht-Entlüfter / -Entfeuchter 6 beziehungsweise der Rührwerkskugelmühle 8 ein Umschaltventil 18 angeordnet, so dass das Produktgemisch P beziehungsweise (teil)veredelte Produkt Pv entweder dem Dünnschicht-Entlüfter / -Entfeuchter 6 oder der Rührwerkskugelmühle 8 zugeführt wird. Beispielsweise kann dem Umschaltventil 18 ein Sensor zugeordnet sein, der bestimmte Produkteeigenschaften misst, woraufhin eine Steuereinheit (nicht dargestellt) das Umschaltventil 18 ansteuert und entsprechend einstellt. In der Rührwerkskugelmühle 8 wird die gewünschte Endfeinheit des veredelten Produktes Pv hergestellt.

Anschließend wird das Produkt PFEIN mit der gewünschten Endfeinheit weiter in einen externen Fertig-Produkttank 10 überführt. Dies kann beispielsweise vermittels einer Pumpe (nicht dargestellt) erfolgen.

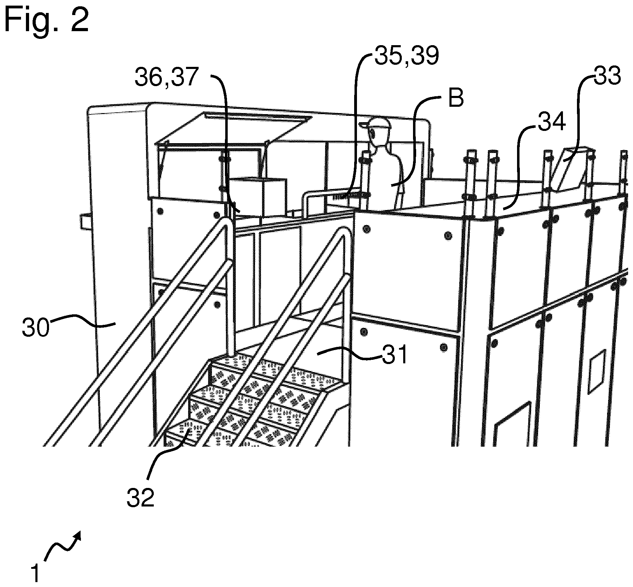

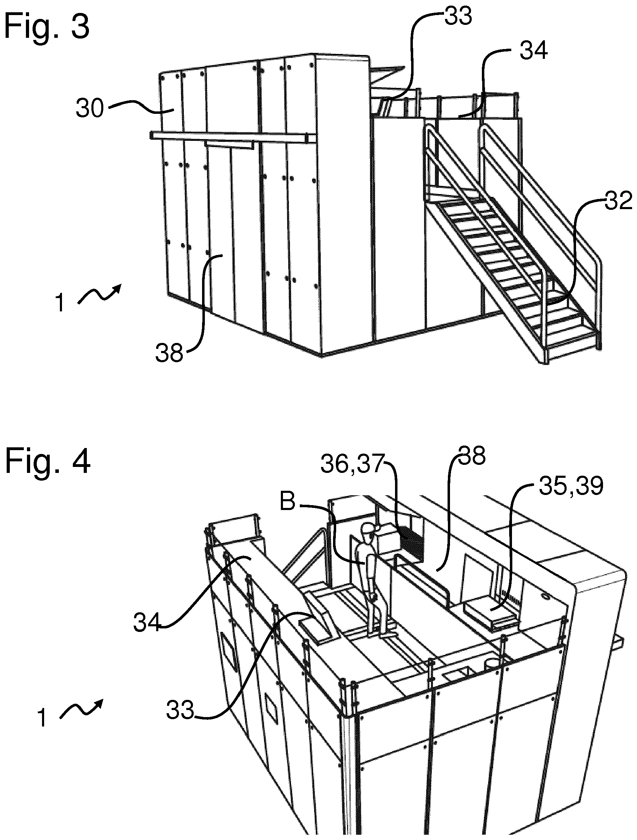

Figuren 2 bis 4 zeigen verschiedene Ansichten der Anlage 1. Die Anlage 1 ist komplett von einem Gehäuse 30 umschlossen, welches in einem oberen Bereich eine Arbeitsbühne 31 für einen oder mehrere Bediener B aufweist, die über einen Zugang 32 erreichbar ist. Die Arbeitsbühne 31 umfasst ein Bedienterminal 33, getrennte Aufgabemöglichkeiten 35, 36 für die zur Herstellung der Zusammensetzung benötigten Rohstoffe wie z.B. einen ersten Aufgabeplatz 35 für pulverförmige Rohstoffe oder Additive und einen zweiten Aufgabeplatz 36 für Fette / Öle. Weiterhin kann eine Arbeitsfläche 34 für leichte Reinigungsarbeiten vorgesehen sein. Die Rohstoffe werden der Arbeitsbühne 31 über einen abgeschlossenen Aufzug 38 zugeführt. Der Aufzug 38 ist derart ausgestaltet, dass er in einer ersten Beladeposition von außen zugänglich ist und in einer zweiten Entnahmeposition für den Bediener B auf der Arbeitsbühne 31 zugänglich ist. Der Aufzug 38 ist so ausgelegt, dass mindestens eine Euro- Palette in ihm Platz hat, so dass alle Bestandteile der Rezeptur auf einer Euro- Palette in den Aufzug 38 eingebracht und auf die Höhe der Arbeitsbühne 31 gefahren werden können.

Insbesondere wird die mit Rohstoffen beladene Palette per Stapler zum Hubtisch des Aufzugs 38 transportiert und auf diesem abgesetzt. Der Aufzug wird verschlossen, beispielsweise mittels einer manuell einstellbaren oder automatisch verschließbaren Schiebetür, und der Hubtisch wird hochgefahren. Von der auf Arbeitshöhe gefahrenen Euro- Palette entnimmt der Bediener B dann sämtliche Rohstoffe, die für einen Ansatz benötigt werden. Die "Entnahmehöhe", also die Position der Palette im Aufzugschacht, kann jeweils ergonomisch günstig angepasst werden, was die Entnahme der Zutaten vereinfacht. Insbesondere kann der Bediener B mittels einer Zweihandbedienung oder Ähnlichem den Hubtisch des Aufzugs 38 immer in eine geeignete Höhe bringen, so dass er die Rohstoffe nicht anheben muss, das heißt der Bediener B kann die Palette einfach in einer für ihn günstigen Arbeitshöhe "parken". Wenn der Bediener B auf der Arbeitsbühne 31 vor dem Aufzug 38 steht, befindet sich auf einer Seite der zweiten Aufgabeplatz 36 für Fette / Öle. Dieser umfasst vorzugsweise eine Abdeckklappe. Werden für den Ansatz feste Fette verwendet, so werden diese von der Palette in einem Karton entnommen und dieser Karton wird nach Öffnen der Abdeckklappe in den zweiten Aufgabeplatz 36 entleert. Alternativ werden die Öle aus ihren Verpackungseinheiten in den zweiten Aufgabeplatz 36 gegeben. Über ein beheizbares Aufgabegitter 37 wird das Fett geschmolzen und im flüssigen Zustand in einen Fettvorlagebehälter 11 (vergleiche Figuren 1, 5 bis 7) eingebracht. Vorzugsweise ist das beheizbare Aufgabegitter 37 zumindest leicht nach hinten geneigt, so dass die Fettblöcke von selbst an die Rückwand des zweiten Aufgabeplatzes 36 hingleiten. Anschließend wird die Abdeckklappe des zweiten Aufgabeplatzes 36 verschlossen, um diesen sauber zu halten und eine Verschmutzung der Anlage1, insbesondere der Arbeitsbühne 31, durch geschmolzenes Fett zu verhindern.

Auf der anderen Seite des Bedieners B und oberhalb des Mischbehälters 2 (vergleiche Figuren 1, 5 bis 7) befindet sich der erste Aufgabeplatz 35 für die pulverförmigen Rohstoffe, beispielsweise Kristallzucker, Kakaopulver, Milchpulver und so weiter. Alle pulverförmigen Rohstoffe, die für die Zusammensetzung benötigt werden, werden ebenfalls auf der Palette im Aufzug 38 vorgehalten. Der Bediener B überführt die Verpackungen mit den Rohstoffen von dem Aufzug 38 in Richtung des ersten Aufgabeplatzes 35. Anschließend werden die Verpackungen geöffnet. Dies geschieht entweder manuell durch den Bediener B. Es können aber auch geeignete Vorrichtungen für eine automatisierte Entnahme, Öffnen und / oder Einfüllen der restlichen, pulverförmigen Rohstoffe vorgesehen sein. Die Rohstoffe werden in den Aufgabetrichter 39 entleert. Unterhalb des Aufgabetrichters 39 befindet sich eine Schleusenklappe (nicht dargestellt), die während des Pulveraufgabevorganges geöffnet ist. Die pulverförmigen Rohstoffe werden über den Aufgabetrichter 39 direkt in den Mischbehälter 2 (vergleiche Figuren 1, 5 bis 7) eingefüllt.

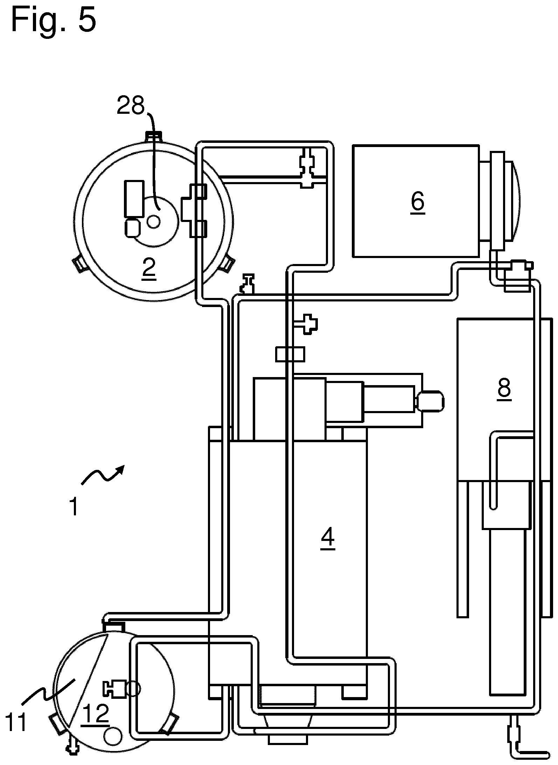

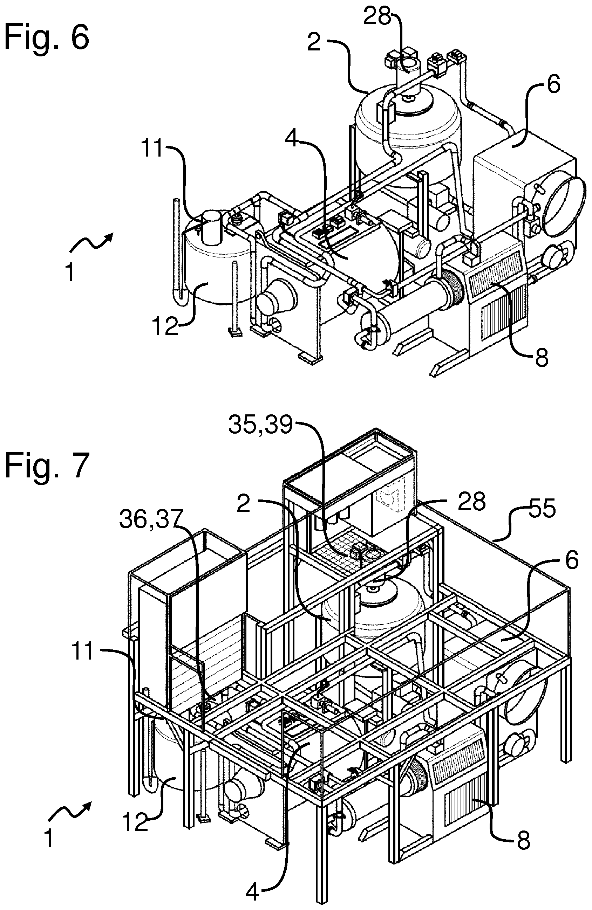

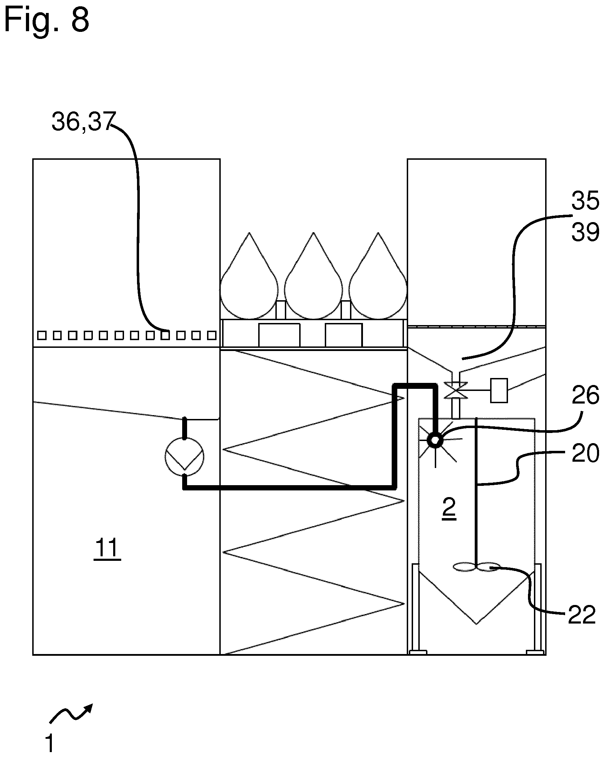

Figur 5 zeigt eine Darstellung einer Anordnung der Komponenten einer erfindungsgemäßen Anlage 1 von oben; Figur 6 zeigt eine perspektivische Darstellung einer Anordnung der Komponenten einer erfindungsgemäßen Anlage1, Figur 7 zeigt eine perspektivische Darstellung einer Anordnung der Komponenten einer erfindungsgemäßen Anlage 1 inklusive der Darstellung von Rahmenelementen 55 für das Gehäuse (nicht dargestellt) der Anlage 1 und Figur 8 zeigt einen Querschnitt durch eine erfindungsgemäße Anlage 1. Die Einzelkomponenten der Anlage 1 sind jeweils mit denselben Bezugszeichen wie in den Figuren 1 versehen und werden teilweise nicht erneut beschrieben, stattdessen wird auf die Beschreibung zu der Figur 1 verwiesen.

Aus dem Vergleich der Figuren 6 und 7 ergibt sich insbesondere, dass der erste Aufgabeplatz 35 für die pulverförmigen Rohstoffe direkt oberhalb des Mischbehälters 2 angeordnet ist, so dass die pulverförmigen Rohstoffe direkt in den Mischbehälter 2 eingefüllt werden. Der zweite Aufgabeplatz 36 für das Fett ist dagegen oberhalb des Fettvorlagebehälters 11 angeordnet. Von diesem Fettvorlagebehälter 11 wird das Fett in den Mischbehälter 2 geleitet beziehungsweise gepumpt.

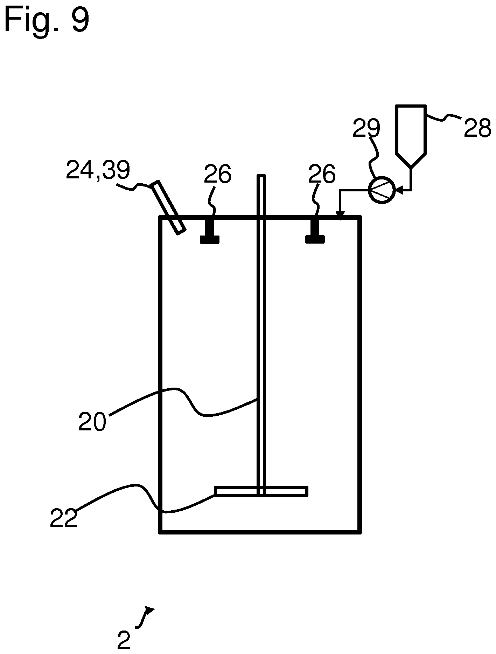

Figur 9 zeigt eine schematische Darstellung eines Mischbehälters 2. Von dem Fettvorlagebehälter 11 (vergleiche Figuren 1 und 5 bis 8) wird das flüssige Fett über mindestens eine Sprühkopfdüse 26 am Deckel des Ansatz- bzw. Mischbehälters 2 in diesen geleitet beziehungsweise gepumpt. Damit wird zu Beginn jedes neuen Ansatzes eine Vorreinigung des Mischbehälters 2 erzielt. Ein Teil des für den Ansatz benötigten Fettes wird für einen nachfolgenden Zwischenreinigungsschritt zurückgehalten. In dem Mischbehälter 2 bewegt sich eine Mischer- beziehungsweise Dissolverscheibe 22, die die nachfolgend zugefügten Rohstoffe kontinuierlich und gleichmäßig mit dem vorgelegten, temperierten, flüssigen Fett vermischt.

Aus einem zusätzlichen separaten (beheizbaren) Vorratsbehälter 28 können Additive wie Lecithin oder andere Zusatzstoffe mittels Dosierpumpen 29 zugegeben werden. Dies kann je nach ausgewählter Rezeptur automatisch erfolgen. Die pulverförmigen Rohstoffe werden über einen Rohstoffeinlass 24 in den mit Fett teilweise befüllten Mischbehälter eingefüllt. Dabei kann es sich insbesondere um eine Verlängerung des bereits im Zusammenhang mit den Figuren 2 bis 4 beschriebenen Aufgabetrichters 39 handeln. Durch die separate Aufgabemöglichkeit von pulverförmigen Rohstoffen und flüssigen fetthaltigen Rohstoffen und Additiven werden wirksam Anbackungen und / oder Verklebungen an den Aufgabestationen 35, 36 verhindert. Die Aufgabe der Additive aus dem zusätzlichen Vorratsbehälter 28 kann entweder programmgesteuert oder manuell durch den Bediener B erfolgen.

Nachdem alle pulverförmigen Rohstoffe im Mischbehälter 2 in das flüssige Fett eingemischt sind, wird das sogenannte Rohstoffgemisch R durch Pumpen 3 in den Prozessbehälter 4 überführt. Nachdem das Rohstoffgemisch R aus dem Mischbehälter 2 in den Prozessbehälter 4 überführt wurde, wird eine zurückgehaltene Restmenge Fett über die Reinigungsdüsen 26 in den Mischbehälter 2 eingebracht und anschließend in den Prozessbehälter 4 weitergepumpt. Mit dieser geringen Restfettmenge werden letzte Rohstoff-Bestandteile aus dem Mischbehälter 2 in den Prozessbehälter 4 (vergleiche Figur 9) überführt und zugleich eine Zwischenreinigung des Mischbehälters 2 durchgeführt. Durch Durchmischen des Rohstoffgemisches R und der Restmenge Fett im Prozessbehälter 4 erhält man die Produktgemisch P.

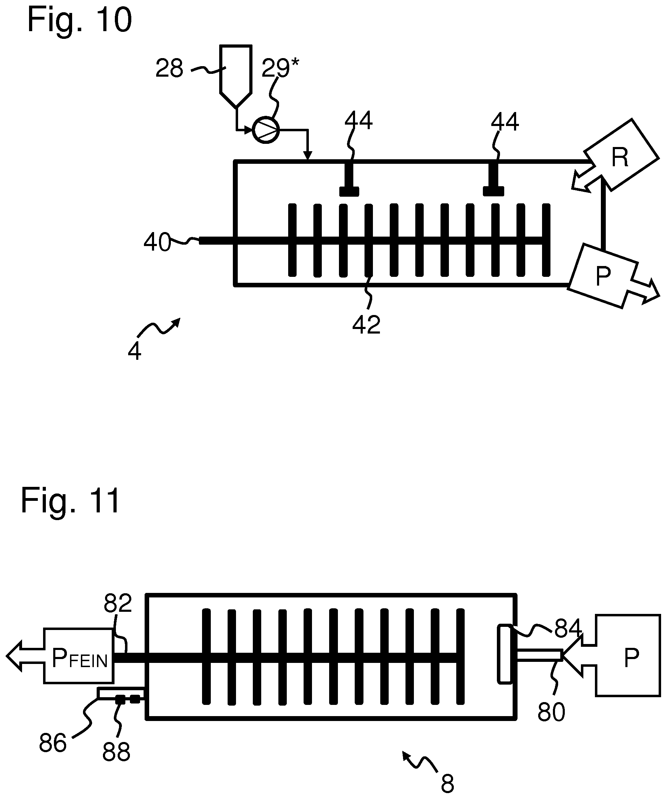

Figur 10 zeigt eine schematische Darstellung eines Prozessbehälters 4. Im Prozessbehälter 4 ist mindestens eine Mischwelle 40 angeordnet, welche das eingepumpte Rohstoffgemisch R und die Restmenge an Fett kontinuierlich in Bewegung hält und zu einem Produktgemisch P vermischt. Durch die kontinuierliche Bewegung wird zudem das Absetzen von Kristallzucker oder anderen grobkörnigen Komponenten des Produktgemisches P vermieden.

Der letzte Produktionsschritt besteht darin, bei dem veredelten Produkt Pv aus dem Prozessbehälter 4 (vergleiche auch Beschreibung zu Figur 1) die gewünschte Endfeinheit herzustellen. Dazu wird das veredelte Produkt Pv in eine Rührwerkskugelmühle 8 überführt, wie sie beispielhaft in Figur 11 dargestellt ist. Zu diesem Zweck wird eine bestimmte Menge an veredeltem Produkt Pv in die Rührwerkskugelmühle 8 eingefüllt, bis an dem Materialausgang 86 der Rührwerkskugelmühle 8 eine geringe Menge des veredelten Produktes Pv austritt. Dies wird durch Sensoren 88 gemessen. Die wichtigste Messgröße ist in diesem Fall die Temperatur, da die Produktaustrittstemperatur nach der Mühle höher ist als die Eintrittstemperatur (Temperatur zwischen 40° und 60°). Im gefüllten Zustand läuft die Rührwerkskugelmühle 8 für eine vorbestimmte Zeit, ohne dass weiteres veredeltes Produkt Pv hinzugepumpt bzw. in der Rührwerkskugelmühle 8 befindliches veredeltes Produkt Pv abgepumpt wird. Nach der vorgegebenen Zeit erreicht das veredelte Produkt Pv somit seine gewünschte Endfeinheit. Nach dieser Zeit wird das Produkt PFEIN weiter in den externen Fertig- Produkttank 10 (vergleiche Figur 1) geführt. Gleichzeitig wird das Zuführen von nicht gemahlenem veredeltem Produkt Pv aus dem Prozessbehälter 4 fortgesetzt.

Durch diese Vorgehensweise wird die Menge an veredeltem Produkt Pv reduziert, die aufgrund von sich ändernden Betriebsbedingungen in der Anfahrphase noch nicht der geforderten Qualität entspricht und die Vermahlung kann somit ohne nennenswerte Verluste bzw. Abfallmengen durchgeführt werden. In einer weiteren Ausführungsform ist es, wie in herkömmlichen Verfahren möglich, das zu vermahlende Produkt PFEIN im Kreis zu fahren. Im Einlassbereich 80 der Rührwerkskugelmühle 8 befindet sich ein Vorzerkleinerungsmodul 84 zur Vorzerkleinerung von Grobprodukten, welches sogar in der Lage ist, Nüsse bzw. Keksbruch oder dergleichen zu zerkleinern und auf die optimale Eingangsfeinheit der Rührwerkskugelmühle 8 einzustellen.

Eine weitere wichtige Funktion der Anlage 1 ist die Möglichkeit, die Anlage 1 komplett zu reinigen, ohne diese auseinanderbauen zu müssen. Für die Reinigung wird eine bestimmte Fettmenge aus dem Fettvorlagebehälter 11 in den Mischbehälter 2 eingepumpt. Das Einpumpen erfolgt über mindestens einen im Deckel des Mischbehälters 2 angeordneten Sprühkopf 26, wodurch alle im Mischbehälter 2 befindlichen Anbackungen am Deckel und/oder an den Seitenwänden herabgespült werden. Nach dem Spülen des Mischbehälters 2 wird das verwendete Fett über den normalen Produktionsweg in den Prozessbehälter 4 eingebracht. Auch der Prozessbehälter 4 verfügt über mindestens einen, vorzugsweise mindestens zwei Sprühköpfe 44, über welche der komplette Prozessbehälter 4 ausgesprüht und somit gereinigt werden kann. Das Fett aus dem Prozessbehälter 4 kann dann zum Reinigen entweder über den Dünnschicht-Entlüfter/ -Entfeuchter 6 und/oder über die Rührwerkskugelmühle 8 gefahren werden. Dies ist insbesondere über das Umschaltventil 18 steuerbar. Nach Abschluss der Reinigungsarbeiten kann der Bediener B entscheiden, ob das Fett über eine gesonderte Entsorgungsleitung 19 zur Entsorgung gepumpt wird, oder ob es in einen sogenannten Restmassebehälter 12 (vergleiche Figur 1) eingebracht wird. Das im Restmassebehälter 12 befindliche Fett RF, welches mit geringen Mengen an Produkt kontaminiert ist, kann für einen neuen Ansatz verwendet werden.

Um die einzelnen die produktverarbeitenden Einrichtungen verbindenden Leitungen der Anlage 1 zwischen den einzelnen Verfahrensschritten reinigen zu können, verfügt das System weiterhin über ein Reinigungssystem mit Reinigungselementen. Mit Hilfe der Reinigungselemente können hochviskose Flüssigkeiten, pastöse Medien, auch Pulver und Granulate, annähernd restlos aus den Leitungen entfernt werden. Dabei wird ein annähernd kugelförmiges, in der Mitte tailliertes Reinigungselement mit Wasser oder Druckluft durch das Leitungssystem gepresst. Das Reinigungselement weist zumindest bereichsweise eine Querschnittsfläche auf, die weitgehend der Querschnittsfläche der Leitungen entspricht, so dass das Reinigungselement ohne oder nur mit geringem Spiel in der Leitung angeordnet ist. Das Reinigungselement schiebt das aus der Leitung zu entfernende Medium vor sich her. Die eingesetzten Reinigungselemente sind Kunststoffkörper aus verschieden geformtem Material, welche exakt in die Rohrleitungen passen und mit Druckluft durch diese hindurchgetrieben werden. Hierbei liegen Dichtlippen an den Rohrwandungen an, und das Reinigungselement schiebt eventuell in den Leitungen vorhandenes Restprodukt und/oder Fette bis zur nächsten produktverarbeitenden Einrichtung vor sich her. Das Material, welches von dem Reinigungselement beispielsweise in die Rührwerkskugelmühle 8 geschoben wird, kann über die Prozessluft, mit welcher das Reinigungselement bewegt werden kann, auch aus der Rührwerkskugelmühle 8 herausgedrückt werden.

Vorzugsweise sind Verbindungsleitungskreisläufe vorgesehen, beispielsweise ist ein erster Verbindungsleitungskreislauf zwischen dem Mischbehälter 2 und dem Prozessbehälter 4 vorgesehen. Ein zweiter Ringkreislauf ist zwischen Prozessbehälter 4 und Dünnschicht-Entlüfter / -Entfeuchter 6 vorgesehen. Die Funktion wird beispielhaft für den ersten Verbindungsleitungskreislauf zwischen dem Mischbehälter 2 und dem Prozessbehälter 4 beschrieben. Das Reinigungselement wird durch die Leitung zwischen dem Mischbehälter 2 und dem Prozessbehälter 4 geschoben und schiebt dabei Restprodukt vor sich her, das in den Prozessbehälter 4 überführt wird, beispielweise durch Öffnungen in der Verbindungsleitung, während das Reinigungselement weiter in seine vorzugsweise dem Mischbehälter 2 zugeordnete Parkposition gefahren wird. Insbesondere werden mit einem ersten Reinigungselement nach jedem Produktionsschritt eine erste Verbindungsleitung zwischen Mischbehälter 2 und Prozessbehälter 4 beziehungsweise mit einem zweiten Reinigungselement eine zweite Verbindungsleitung zwischen Prozessbehälter 4 und Dünnschicht-Entlüfter / -Entfeuchter 6 gereinigt. Da das Reinigungselement nicht um Ecken fahren kann, sind die Verbindungsleitungen mit entsprechenden Kurven ausgestattet, an denen ein Festsetzen von Produkt bereits aufgrund der Form, insbesondere in Verbindung mit einer antihaftenden Oberfläche, erschwert ist.

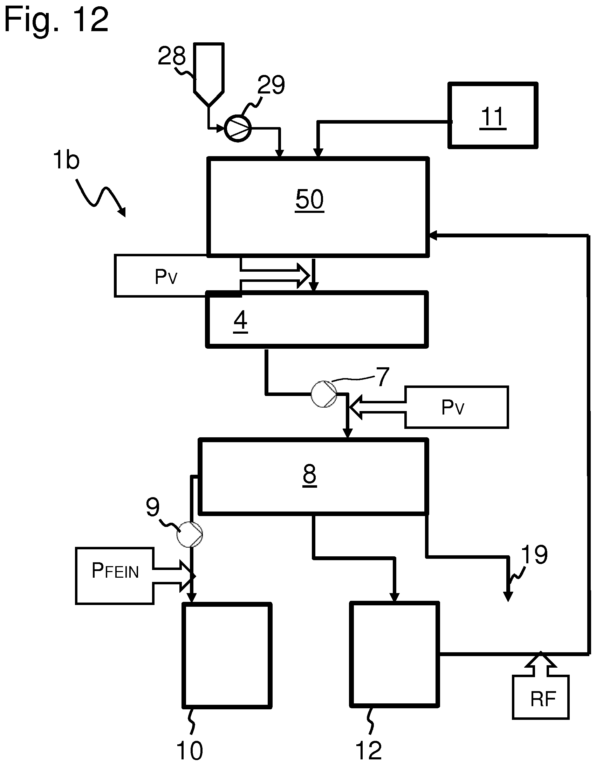

Figur 12 zeigt eine schematische Übersicht der Komponenten einer weiteren Ausführungsform einer erfindungsgemäßen Anlage 1b. Diese unterscheidet sich von der vorab beschriebenen Anlage 1 dadurch, dass zur Verarbeitung von Schokoladenmassen und hochwertigen Zusammensetzungen anstelle des Mischbehälters 2 und des Dünnschicht-Entlüfters / -Entfeuchters 6 eine Conchiervorrichtung 50 zum Einsatz kommt. Hiermit sind eine besonders intensive Durchmischung der Masse sowie die Einstellung der Rheologie, d.h. des Verformungs- und Fließverhaltens der Masse, und des Geschmacks möglich. Dabei erfolgt die Zugabe der Rohstoffe und / oder Additive in die Conchiervorrichtung 50, in der dann auch die Einstellung der gewünschten rheologischen Eigenschaften und des Geschmacks erfolgt. Auch hier kann das oben beschriebene Prinzip der Verwendung von Sprühköpfen zur Zugabe von verflüssigten Fettbestandteilen zum Zuge kommen.

Aus der Conchiervorrichtung 50 wird das Produkt Pv dann entweder in einer Passage durch eine Rührwerkskugelmühle 8 gefahren oder in einem Kreislauf, um die gewünschte Endfeinheit P_{FEIN} zu erreichen. Zur Steigerung der Produktionskapazität kann ein Zwischenbehälter verwendet werden. Beispielsweise ist optional ein Prozessbehälter 4 vorhanden, um den Durchsatz der Anlage 1b zu erhöhen. Insbesondere kann ein Teil des durch die Conchiervorrichtung 50 hergestellten Produktes Pv in dem Prozessbehälter 4 zwischengelagert werden, während ein anderer Teil bereits in der Rührwerkskugelmühle 8 weiter vermahlen wird. Das fertig conchierte Gemisch Pv kann aus dem Prozessbehälter 4 entweder in einer Passage (wie oben beschrieben) oder im Kreislauf zur Vermahlung durch die Rührwerkskugelmühle 8 gepumpt werden, um die geforderte Endfeinheit P_{FEIN} zu erreichen.

Die oben beschriebene Möglichkeit der Vor- und Zwischenreinigung durch den Einsatz von Sprühdüsen und die Zurückhaltung einer Restfettmenge kann in dieser Ausführungsform analog durchgeführt werden. Insbesondere gestaltet sich aufgrund der deutlich geringeren Anzahl von Einzelmaschinen die Reinigung der Anlage 1b mit Conchiervorrichtung 50 einfacher als bei der in den Figuren 1 bis 11 beschriebenen Anlage 1. Analog zur ersten beschriebenen Ausführungsform ist der Einsatz von Sprühdüsen (26, 44 vergleiche Figuren 8 und 9) und der vorbeschriebenen Reinigungstechnologie mit Reinigungselementen innerhalb der Verbindungsleitungen der Anlage 1b möglich.

Die Erfindung wurde unter Bezugnahme auf eine bevorzugte Ausführungsform beschrieben. Es ist jedoch für einen Fachmann vorstellbar, dass Abwandlungen oder Änderungen der Erfindung gemacht werden können, ohne dabei den Schutzbereich der nachstehenden Ansprüche zu verlassen.

### Bezugszeichenliste

- 1: Anlage
- 2: Ansatz- beziehungsweise Mischbehälter / Mischbehälter
- 3: Pumpe
- 4: Prozessbehälter
- 5: Pumpe
- 6: Dünnschicht-Entlüfter / -Entfeuchter
- 7: Pumpe
- 8: Rührwerkskugelmühle
- 10: Produkttank (extern)
- 11: Fettvorlagebehälter
- 12: Restmassebehälter
- 18: Umschaltventil
- 19: Entsorgungsleitung
- 20: Rührwelle
- 22: Rührscheibe
- 24: Rohstoffeinlass
- 26: Reinigungs- / Fettdüsen
- 28: Vorratsbehälter für Additive
- 29: Dosierpumpe
- 30: Gehäuse
- 31: Arbeitsbühne
- 32: Zugang
- 33: Bedienterminal
- 34: Arbeitsfläche
- 35: erster Aufgabeplatz
- 36: zweiter Aufgabeplatz
- 37: Aufgabegitter
- 38: Aufzug
- 39: Aufgabetrichter
- 40: Rührwelle
- 42: Rührorgane
- 44: Reinigungsdüsen
- 50: Conchiervorrichtung
- 80: Materialeinlass
- 82: Rührwelle
- 84: Vorzerkleinerungsmodul
- 86: Materialauslass
- 88: Sensoren

- B: Bediener / Bedienpersonal
- R: Rohstoffgemisch
- RF: Restmasse- Fett
- P: Produktmischung
- P_{FEIN}: vermahlenes Produkt
- Pv: veredeltes Produkt

## Patentansprüche

1. Anlage (1, 1b) zur Herstellung und / oder Aufbereitung von Confectionery- Massen aus mindestens einem flüssigen Rohstoff und körnigen und / oder pulverförmigen Rohstoffen, umfassend mindestens einen ersten Mischbehälter (2, 50) und mindestens eine weitere produktverarbeitende Einrichtung (4, 6, 8), wobei der erste Mischbehälter (2 ,50) mindestens einen Rohstoffeinlass (24) und einen Produktauslass und eine Mischvorrichtung (22) zum homogenen Vermischen der Rohstoffe aufweist, wobei zumindest der erste Mischbehälter (2, 50) in einem oberen Behälterbereich mindestens eine Sprüheinrichtung (26) zur Zuführung des mindestens einen flüssigen Rohstoffs umfasst, wobei mindestens ein Austrittskegel der Sprüheinrichtung (26) zumindest bereichsweise in Richtung einer Innenwandfläche des ersten Mischbehälters (2, 50) gerichtet ist, **dadurch gekennzeichnet, dass** die mindestens eine Sprüheinrichtung (26) schwenkbeweglich und / oder rotationsbeweglich ist.

2. Anlage (1, 1b) nach Anspruch 1, wobei zwei prozesstechnisch miteinander gekoppelte produktverarbeitende Einrichtungen (2, 50, 4, 6, 8), über eine Verbindungsleitung verbunden sind und wobei in der Verbindungsleitung ein entlang der Verbindungsleitung bewegliches Reinigungselement angeordnet ist, wobei das Reinigungselement zumindest bereichsweise einen Querschnitt aufweist, der annähernd einem Querschnitt der Verbindungsleitung entspricht und wobei zwischen der Innenwandung der Verbindungsleitung und dem Reinigungselement zumindest bereichsweise kein oder nur ein geringes Spiel ausgebildet ist.

3. Anlage (1, 1b) nach einem der voranstehenden Ansprüche, wobei die Anlage (1) einen Mischbehälter (2), eine Veredelungsvorrichtung (6), einen Prozessbehälter (4) und eine Mahlvorrichtung (8) umfasst und wobei jeweils zwischen Mischbehälter (2) und Prozessbehälter (4), zwischen Prozessbehälter (4) und Veredelungsvorrichtung (6) und / oder zwischen Prozessbehälter (4) und Mahlvorrichtung (8) eine Verbindungsleitung mit einem Reinigungselement vorgesehen ist.

4. Anlage (1, 1b) nach Anspruch 3, wobei der Mahlvorrichtung (8) eine Vorzerkleinerungseinrichtung (84) zugeordnet ist.

5. Anlage (1, 1b) nach Anspruch 3 oder 4, wobei der Mahlvorrichtung (8) am Produktausgang (86) mindestens ein Sensor (88) zur Detektion von Produktaustritt aus der Mahlvorrichtung (8) zugeordnet ist.

6. Anlage (1, 1b) nach einem der voranstehenden Ansprüche, wobei die Anlage einen Vorratsbehälter (11) für vorgewärmtes, flüssiges Fett, einen ersten Mischbehälter (2, 50), einen zweiten Prozessbehälter (4), eine Veredelungsvorrichtung (6) und eine Mahlvorrichtung (8) umfasst, die von einem Gehäuse umgeben sind, wobei an einer Bedienerseite des Gehäuse (30) eine erste Einfülleinrichtung (35) für körnige und / oder pulverförmige Rohstoffe vorgesehen ist und eine zweite Einfülleinrichtung (36) für einen Rohstoff Fett vorgesehen ist.

7. Anlage (1, 1b) nach Anspruch 6, wobei die Bedienerseite des Gehäuses (30) eine Oberseite ist, die als Arbeitsbereich für einen menschlichen Bediener ausgebildet ist, wobei die erste Einfülleinrichtung (35) weitgehend oberhalb des ersten Mischbehälter (2, 50) angeordnet ist, als Einfülltrichter (39) ausgebildet ist und einen direkten Zugang (24) zum ersten Mischbehälter (2, 50) aufweist.

8. Anlage (1, 1b) nach Anspruch 6 oder 7, wobei die zweite Einfülleinrichtung (36) eine Schmelzvorrichtung (37) zum Aufschmelzen von in fester Form bereitgestellten Fetten umfasst und wobei zumindest der Vorratsbehälter (11) eine Heizeinrichtung umfasst.

9. Anlage (1, 1b) nach einem der Ansprüche 6 bis 8, wobei die Anlage (1, 1b) ein Aufzugmittel (38) für die Bereitstellung von Rohstoffen umfasst.

10. Anlage (1, 1b) nach Anspruch 9, wobei das Aufzugmittel (38) zwischen der ersten und der zweiten Einfülleinrichtung (35, 36) angeordnet ist und wobei die vertikale Position des Aufzugmittels (38) einstellbar ist.

11. Verfahren zur Herstellung und / oder Aufbereitung von Confectionery- Massen in einer Anlage (1, 1b) zur Herstellung von Confectionery- Massen gemäß einem der Ansprüche 1 bis 11, wobei in einem ersten Mischbehälter (2, 50) mindestens ein flüssiger Rohstoff mit körnigen und / oder pulverförmigen Rohstoffen vermischt wird und wobei die Rohstoffmischung (R) in mindestens einer weiteren produktverarbeitenden Einrichtung (4, 6, 8) in zumindest einem weiteren Verfahrensschritt weiterverarbeitet wird, wobei der flüssige Rohstoff über mindestens eine Sprüheinrichtung (26) in einen oberen Behälterbereich des Mischbehälters (2, 50) eingesprüht wird, wobei der flüssige Rohstoff zumindest bereichsweise die Innenwandflächen in einem oberen Behälterbereich des ersten Mischbehälters (2, 50) vollständig benetzt, **dadurch gekennzeichnet, dass** eine Teilmenge des gemäß einer vorgegebenen Rezeptur notwendigen flüssigen Rohstoffs mit den gemäß der Rezeptur vorgegebenen notwendigen gesamten körnigen und / oder pulverförmigen Rohstoffen zu einem ersten Teilgemisch vermischt wird,
wobei das Teilgemisch über eine Verbindungsleitung in einen zweiten Prozessbehälter (4) überführt wird,
wobei eine Restmenge des gemäß der vorgegebenen Rezeptur notwendigen flüssigen Rohstoffs über mindestens eine Sprüheinrichtung (26) in einen oberen Behälterbereich des entleerten Mischbehälters (2, 50) eingesprüht wird, so dass die Innenwandfläche im oberen Behälterbereich des ersten Mischbehälters (2, 50) zumindest weitgehend vollständig benetzt wird und
wobei die Restmenge des flüssigen Rohstoffs in den zweiten Prozessbehälter (4) überführt wird.

12. Verfahren nach Anspruch 11, wobei das Teilgemisch und die Restmenge des flüssigen Rohstoffs in dem zweiten Prozessbehälter (4) zu einem Produktgemisch (P) vermischt werden.

13. Verfahren nach Anspruch 11 oder 12, wobei eine Verbindungsleitung zwischen dem ersten Mischbehälter (2, 50) und dem zweiten Prozessbehälter (4) nach dem Überführen des Teilgemischs und / oder der Restmenge an flüssigem Rohstoff mittels eines Reinigungselements durchlaufen und gereinigt wird.

14. Verfahren nach einem der Ansprüche 11 bis 13, wobei das Produktgemisch (P) in einer Veredelungseinrichtung (6) weiterverarbeitet wird, insbesondere wobei das Produktgemisch (P) mehrfach im Kreislauf zwischen dem zweiten Prozessbehälter (4) und der Veredelungseinrichtung (6) gefördert wird.

15. Verfahren nach Anspruch 14, wobei eine Verbindungsleitung zwischen dem zweiten Prozessbehälter (4) und der Veredelungseinrichtung (6) während des Veredelungsprozesses mehrfach von einem Reinigungselement durchlaufen und dabei gereinigt wird und / oder wobei eine Verbindungsleitung zwischen dem zweiten Prozessbehälter (4) und der Veredelungseinrichtung (6) nach Abschluss des Veredelungsprozesses von einem Reinigungselement durchlaufen und dabei gereinigt wird.

16. Verfahren nach Anspruch 14 oder 15, wobei veredeltes Produkt (Pv) einer Mahlvorrichtung (8) zugeführt wird, wobei die Befüllung der Mahlvorrichtung (8) sensorisch ermittelt wird, wobei die Produktzufuhr nach Erreichen der Maximalbefüllung zumindest zeitweise unterbrochen wird und das veredelte Produkt (Pv) in der Mahlvorrichtung (8) innerhalb einer vorbestimmten Zeit feinvermahlen wird, wobei feinvermahlenes Produkt (P_{FEIN}) aus der Mahlvorrichtung (8) entnommen wird.

17. Verfahren nach Anspruch 16, wobei eine Verbindungsleitung zwischen dem zweiten Prozessbehälter (4) und der Mahlvorrichtung (8) zumindest nach Entleeren des zweiten Prozessbehälters (4) von einem Reinigungselement durchlaufen und dabei gereinigt wird.

## Claims

1. An installation (1, 1b) for producing and/or processing confectionery masses made from at least one liquid raw material and granular and/or powdery raw materials, comprising at least one first mixing container (2, 50) and at least one further product-processing device (4, 6, 8), wherein the first mixing container (2, 50) has at least one raw material inlet (24) and a product outlet and a mixing device (22) for homogenously mixing the raw materials, wherein at least the first mixing container (2, 50) comprises at least one spraying device (26) in an upper container area for supplying the at least one liquid raw material, wherein at least one outlet cone of the spraying device (26) is, at least in some areas, directed towards an inner wall surface of the first mixing container (2, 50), **characterized in that** the at least one spraying device (26) is pivotably and/or rotationally movable.

2. The installation (1, 1b) according to claim 1, wherein two product-processing devices (2, 50, 4, 6, 8), which are procedurally coupled to one another, are connected to one another via a connecting line and wherein a cleaning element, which is movable along the connecting line, is arranged within the connecting line, wherein the cleaning element has, at least in some areas, a cross section which corresponds approximately to a cross section of the connecting line, and wherein no or only a small clearance is formed, at least in some areas, between the inner wall of the connecting line and the cleaning element.

3. The installation (1, 1b) according to one of the previous claims, wherein the installation (1) comprises a mixing container (2), a refinement device (6), a process container (4) and a grinding device (8), and wherein a connecting line comprising a cleaning element is provided, in each case, between the mixing container (2) and the process container (4), between the process container (4) and the refinement device (6) and / or between the process container (4) and the grinding device (8).

4. The installation (1, 1b) according to claim 3, wherein a pre- shredding device (84) is assigned to the grinding device (8).

5. The installation (1, 1b) according to claim 3 or 4, wherein at least one sensor (88) for detecting product discharge from the grinding device (8) is associated with the grinding device (8) at the product outlet (86).

6. The installation (1, 1b) according to one of the previous claims, wherein the installation comprises a storage container (11) for preheated liquid fat, a first mixing container (2, 50), a second process container (4), a refinement device (6) and a grinding device (8), which are surrounded by a housing, wherein a first filling device (35) for granular and/or powdery raw materials, and a second filling device (36) for a raw material fat are provided on an operator side of the housing (30).

7. The installation (1, 1b) according to claim 6, wherein the operator side of the housing (30) is an upper side which is designed as a work area for a human operator, wherein the first filling device (35) is arranged largely above the first mixing container (2, 50), which first filling device (35) is designed as filling funnel (39) and has a direct access (24) to the first mixing container (2, 50).

8. The installation (1, 1b) according to claim 6 or 7, wherein the second filling device (36) comprises a melting device (37) for melting fats, which fats are provided in solid form, and wherein at least the storage container (11) comprises a heating device.

9. The installation (1, 1b) according to one of the claims 6 to 8, wherein the installation (1, 1b) comprises a lifting means (38) for providing raw materials.

10. The installation (1, 1b) according to claim 9, wherein the lifting means (38) is arranged between the first and the second filling device (35, 36) and wherein the vertical position of the lifting means (38) is adjustable.

11. A method for producing and/or processing confectionery masses in an installation (1, 1b) for producing confectionery masses according to one of the claims 1 to 10, wherein at least one liquid raw material is mixed in a first mixing container (2, 50) with granular and/or powdery raw materials, and wherein the raw material mixture (R) is further processed in at least one further product-processing device (4, 6, 8) in at least one further process step, wherein the liquid raw material is sprayed into an upper container area of the mixing container (2, 50) via at least one spraying device (26), wherein the liquid raw material completely wets, at least in sections, the inner wall surfaces in an upper container area of the first mixing container (2, 50), **characterized in that** a partial quantity of the liquid raw material, which is required according to a predetermined recipe, is mixed with all of the granular and/or powdery raw materials, which are required according to the recipe, to form a first partial mixture,
wherein the partial mixture is transferred into a second process container (4) via a connecting line,
wherein a residual quantity of the liquid raw material, which is required according to the predetermined recipe, is sprayed via at least one spraying device (26) into an upper container area of the emptied mixing container (2, 50), so that the inner wall surface in the upper container area of the first mixing container (2, 50) is at least substantially completely wetted and
wherein the residual quantity of the liquid raw material is transferred into the second process container (4).

12. The method according to claim 11, wherein the partial mixture and the residual quantity of the liquid raw material are mixed in the second process container (4) to form a product mixture (P).

13. The method according to claim 11 or 12, wherein, after the transfer of the partial mixture and/or the residual quantity of liquid raw material, a cleaning element is passing through and thereby cleaning a connecting line between the first mixing container (2, 50) and the second process container (4).

14. The method according to one of the claims 11 to 13, wherein the product mixture (P) is further processed in a refinement device (6), in particular wherein the product mixture (P) is transported repeatedly in circulation between the second process container (4) and the refinement device (6).

15. The method according to claim 14, wherein a cleaning element repeatedly passes through and thereby cleans a connecting line between the second process container (4) and the refinement device (6) during the refinement process and/or wherein a cleaning element passes through and thereby cleans a connecting line between the second process container and the (4) and the refinement device (6) after the refinement process has ended.

16. The method according to claim 14 or 15, wherein refined product (Pv) is transported to a grinding device (8), wherein the filling of the grinding device (8) is determined by sensors, wherein the product supply is interrupted at least temporarily after reaching the maximum filling and wherein the refined product (Pv) is finely ground in the grinding device (8) within a predetermined time period, wherein finely ground product (P_{FEIN}) is removed from the grinding device (8).

17. The method according to claim 16, wherein a cleaning element passes through and thereby cleans a connecting line between the second process container (4) and the grinding device (8) at least after emptying the second process container (4).

## Revendications

1. Installation (1, 1b) de production et/ou de préparation de masses de confiserie à partir d'au moins une matière première liquide et de matières premières granulaires et/ou pulvérulentes, comprenant au moins un premier récipient de mélange (2, 50) et au moins un autre dispositif de traitement de produit (4, 6, 8), dans laquelle ledit premier récipient de mélange (2, 50) comprend au moins une entrée de matière première (24) et une sortie de produit et un dispositif de mélange (22) destiné à mélanger de manière homogène les matières premières, dans laquelle au moins ledit premier récipient de mélange (2, 50) présente dans une zone supérieure de récipient au moins un dispositif de pulvérisation (26) destiné à amener ladite au moins une matière première liquide, dans laquelle au moins un cône de sortie du dispositif de pulvérisation (26) est dirigé au moins par zones vers une surface de paroi intérieure du premier récipient de mélange (2, 50), **caractérisée par le fait que** ledit au moins un dispositif de pulvérisation (26) est mobile en pivotement et/ou mobile en rotation.

2. Installation (1, 1b) selon la revendication 1, dans laquelle deux dispositifs de traitement de produit (2, 50, 4, 6, 8) couplés l'un à l'autre en termes de processus sont reliés par une conduite de liaison, et dans laquelle un élément de nettoyage mobile le long de la conduite de liaison est disposé dans la conduite de liaison, dans laquelle l'élément de nettoyage présente au moins par zones une section transversale qui correspond approximativement à une section transversale de la conduite de liaison, et dans laquelle, au moins par zones, aucun jeu ou seulement un faible jeu (n')est formé entre la paroi intérieure de la conduite de liaison et l'élément de nettoyage.

3. Installation (1, 1b) selon l'une quelconque des revendications précédentes, dans laquelle l'installation (1) comprend un récipient de mélange (2), un dispositif d'affinage (6), un récipient de processus (4) et un dispositif de broyage (8), et dans laquelle une conduite de liaison comprenant un élément de nettoyage est prévue respectivement entre le récipient de mélange (2) et le récipient de processus (4), entre le récipient de processus (4) et le dispositif d'affinage (6) et/ou entre le récipient de processus (4) et le dispositif de broyage (8).

4. Installation (1, 1b) selon la revendication 3, dans laquelle un dispositif de pré-broyage (84) est associé au dispositif de broyage (8).

5. Installation (1, 1b) selon la revendication 3 ou 4, dans laquelle au moins un capteur (88) destiné à détecter une sortie de produit dudit dispositif de broyage (8) est associé au dispositif de broyage (8) à la sortie de produit (86).

6. Installation (1, 1b) selon l'une quelconque des revendications précédentes, dans laquelle l'installation comprend un récipient de stockage (11) pour de la graisse liquide préchauffée, un premier récipient de mélange (2, 50), un deuxième récipient de processus (4), un dispositif d'affinage (6) et un dispositif de broyage (8) qui sont entourés d'un boîtier, dans laquelle un premier dispositif de remplissage (35) pour des matières premières granulaires et/ou pulvérulentes et un deuxième dispositif de remplissage (36) pour une matière première qui est la graisse sont prévus sur un côté opérateur du boîtier (30).

7. Installation (1, 1b) selon la revendication 6, dans laquelle le côté opérateur du boîtier (30) est une face supérieure qui est conçue en tant que zone de travail pour un opérateur humain, dans laquelle ledit premier dispositif de remplissage (35) est disposé dans une large mesure au-dessus du premier récipient de mélange (2, 50), est conçu comme entonnoir de remplissage (39) et présente un accès direct (24) au premier récipient de mélange (2, 50).

8. Installation (1, 1b) selon la revendication 6 ou 7, dans laquelle le deuxième dispositif de remplissage (36) comprend un dispositif de fusion (37) destiné à faire fondre des graisses fournies sous forme solide et dans laquelle au moins ledit récipient de stockage (11) comprend un dispositif de chauffage.

9. Installation (1, 1b) selon l'une quelconque des revendications 6 à 8, dans laquelle l'installation (1, 1b) comprend un moyen élévateur (38) pour la fourniture de matières premières.

10. Installation (1, 1b) selon la revendication 9, dans laquelle ledit moyen élévateur (38) est disposé entre les premier et deuxième dispositifs de remplissage (35, 36) et dans laquelle la position verticale du moyen élévateur (38) est réglable.

11. Procédé de production et/ou de traitement de masses de confiserie dans une installation (1, 1b) de production de masses de confiserie selon l'une quelconque des revendications 1 à 10, dans lequel au moins une matière première liquide est mélangée avec des matières premières granulaires et/ou pulvérulentes dans un premier récipient de mélange (2, 50) et dans lequel le mélange de matières premières (R) est soumis à un traitement ultérieur dans au moins un autre dispositif de traitement de produit (4, 6, 8) dans au moins une autre étape de procédé, dans lequel la matière première liquide est introduite en étant pulvérisée au moyen d'au moins un dispositif de pulvérisation (26) dans une zone supérieure de récipient dudit récipient de mélange (2, 50), dans lequel la matière première liquide mouille complètement, au moins par zones, les surfaces de paroi intérieure dans une zone de récipient supérieure du premier récipient de mélange (2, 50), **caractérisé par le fait qu'**une quantité partielle de la matière première liquide requise selon une recette prédéterminée est mélangée avec l'ensemble des matières premières granulaires et/ou pulvérulentes nécessaires prédéterminées selon la recette de manière à obtenir un premier mélange partiel,
dans lequel le mélange partiel est transféré dans un deuxième récipient de processus (4) via une conduite de liaison,
dans lequel une quantité restante de la matière première liquide requise selon la recette prédéterminée est introduite en étant pulvérisée au moyen d'au moins un dispositif de pulvérisation (26) dans une zone de récipient supérieure du récipient de mélange (2, 50) vidé, de sorte que la surface de paroi intérieure dans la zone de récipient supérieure du premier récipient de mélange (2, 50) est mouillée dans une large mesure complètement, et
dans lequel la quantité restante de la matière première liquide est transférée dans ledit deuxième récipient de processus (4).

12. Procédé selon la revendication 11, dans lequel le mélange partiel et la quantité restante de la matière première liquide dans le deuxième récipient de processus (4) sont mélangés pour obtenir un mélange de produits (P).

13. Procédé selon la revendication 11 ou 12, dans lequel, après avoir transféré le mélange partiel et/ou la quantité restante de matière première liquide, une conduite de liaison entre le premier récipient de mélange (2, 50) et le deuxième récipient de processus (4) est traversée et nettoyée au moyen d'un élément de nettoyage.

14. Procédé selon l'une quelconque des revendications 11 à 13, dans lequel le mélange de produits (P) est soumis à un traitement ultérieur dans un dispositif d'affinage (6), en particulier dans lequel le mélange de produits (P) est transporté à plusieurs reprises en circuit entre le deuxième récipient de processus (4) et le dispositif d'affinage (6).

15. Procédé selon la revendication 14, dans lequel une conduite de liaison entre le deuxième récipient de processus (4) et le dispositif d'affinage (6) est traversée à plusieurs reprises au cours du processus d'affinage par un élément de nettoyage tout en étant nettoyée et/ou dans lequel une conduite de liaison entre le deuxième récipient de processus (4) et le dispositif d'affinage (6) est traversée par un élément de nettoyage tout en étant nettoyée après avoir achevé le processus d'affinage.

16. Procédé selon la revendication 14 ou 15, dans lequel le produit raffiné (Pv) est amené à un dispositif de broyage (8), dans lequel le remplissage du dispositif de broyage (8) est déterminé par capteur, dans lequel l'amenée de produit est interrompue au moins temporairement après avoir atteint le niveau de remplissage maximal et le produit raffiné (Pv) est finement broyé à l'intérieur du dispositif de broyage (8) dans un délai prédéterminé, du produit finement broyé (P_{FEIN}) étant retiré du dispositif de broyage (8).

17. Procédé selon la revendication 16, dans lequel une conduite de liaison entre le deuxième récipient de processus (4) et le dispositif de broyage (8) est traversée par un élément de nettoyage tout en étant nettoyée, au moins après avoir vidé le deuxième récipient de processus (4).
